(19) Europäisches Patentamt
European Patent Office
Office européen des brevets

(11) **EP 2 742 644 B1**

(12) **EUROPEAN PATENT SPECIFICATION**

(45) Date of publication and mention
of the grant of the patent:
**13.04.2022 Bulletin 2022/15**

(21) Application number: **12772804.6**

(22) Date of filing: **09.08.2012**

(51) International Patent Classification (IPC):
**H04L 9/08** *(2006.01)*        **H04L 9/30** *(2006.01)*

(52) Cooperative Patent Classification (CPC):
**H04L 9/0841; H04L 9/3013; H04L 9/302**

(86) International application number:
**PCT/IB2012/054060**

(87) International publication number:
**WO 2013/021360 (14.02.2013 Gazette 2013/07)**

(54) **ENCRYPTION AND DECRYPTION METHOD**

VERSCHLÜSSELUNGS- UND ENTSCHLÜSSELUNGSVERFAHREN

PROCÉDÉ DE CHIFFREMENT ET DE DÉCHIFFREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2011 IT GE20110091**

(43) Date of publication of application:
**18.06.2014 Bulletin 2014/25**

(73) Proprietor: **One Hundred Limited**
**1103 Valletta (MT)**

(72) Inventor: **PES, Carlo**
**I-00063 Campagnano di Roma (RM) (IT)**

(74) Representative: **Karaghiosoff, Giorgio Alessandro**
c/o Praxi Intellectual Property S.p.A. - Savona
Via F. Baracca 1R, 4° piano
"Il Gabbiano"
17100 Savona (IT)

(56) References cited:
**US-A1- 2006 280 300    US-B1- 6 798 884**

- K. V. O. RABAH: "Implementation of One-Time Pad Cryptography", INFORMATION TECHNOLOGY JOURNAL, vol. 4, no. 1, 1 January 2005 (2005-01-01) , pages 87-95, XP055022097,
- MERKLE RALPH C ET AL: "HIDING INFORMATION AND SIGNATURES IN TRAPDOOR KNAPSACKS", IEEE TRANSACTIONS ON INFORMATION THEORY, IEEE PRESS, USA, vol. IT-24, no. 5, 1 September 1978 (1978-09-01), pages 525-530, XP002171485, ISSN: 0018-9448, DOI: 10.1109/TIT.1978.1055927
- ANDERSON R J ET AL: "Fortifying key negotiation schemes with poorly chosen passwords", ELECTRONICS LETTERS, IEE STEVENAGE, GB, vol. 30, no. 13, 23 June 1994 (1994-06-23) , pages 1040-1041, XP006000691, ISSN: 0013-5194, DOI: 10.1049/EL:19940697
- SEONGHAN SHIN ET AL: "Elliptic Curve based Authenticated Key Agreement Protocol for Wireless Security", COMPUTATIONAL INTELLIGENCE AND SECURITY, 2006 INTERNATIONAL CONFERENCE ON, IEEE, PI, 1 November 2006 (2006-11-01), pages 1096-1100, XP031012973, ISBN: 978-1-4244-0604-3

**Description**

The invention relates to an encryption and decryption method, which method comprises: a public-key encryption/decryption step, for which it is provided:

> a) a first public key for each of at least two mutually communicating entities and which is exchanged between said at least two mutually communicating entities and which public key is used for encrypting a first message to be transmitted between said at least two mutually communicating entities;
> b) a private key for each of said at least two mutually communicating entities which is used for decrypting the first message encrypted by said public key and exchanged between the two communicating entities;

Encryption/decryption methods of this type are widely known and have been used for a long time.

As regards message encryption/decryption, there are two different types of encryption/decryption methods defined as symmetric or private-key ones and asymmetric ones, that is public-key ones.

In symmetric systems, two entities that wish to exchange a message by subjecting it to encryption and subsequent decryption both have the same key by means of which the message is firstly encrypted and then decrypted by an encryption algorithm that works by using the key. In this case, the key is in possession of the two entitites and it is not transmitted with the message, on the contrary it is secret. The secrecy of the key and therefore the custody thereof is one of the weaknesses of such systems.

Asymmetric encryption/decryption systems are called asymmetric since they have a first public key which is transmitted between the two entities that desire to exchange a message and which is used for carrying out the step encrypting the message to be transmitted by the entity that desires to transmit the message. The public key is known to both the entities, while the receiving entity is provided with a private key allowing the received message that has been encrypted with the public key to be decrypted.

Both the systems are used and have advantages and drawbacks.

The limits of encryption methods consist in that they have to contemporaneously meet different intrinsically contradictory requirements.

On one hand the more complicated the mathematical problems upon which encryption systems are based are, the more they are secure against attacks of any type. On the other hand there is also a search for a higher processing speed or a computational power requirement for executing the programs wherein encryption algorithms are coded. This is important in order to use encryption and decryption systems also on hardware apparatuses having a reduced computational power, such as palmtops, smartphones or other devices.

With reference to symmetric encryption/decryption methods, they are generally the fastest ones but they have limits as regards the length of the message that can be subjected to encryption/decryption.

Asymmetric methods on the contrary allow messages of any length to be encrypted and decrypted, but they require high processing time and computational resources.

Asymmetric methods, the so called public-key ones, are a widely used approach for the secure transmission of messages using transmission channels that otherwise would not be secure. The asymmetric pairs of keys are composed of two separate keys of which a public key used for treating data in one manner and a second key for converting again the treated data to the original form. Keys are based on mathematical relations by means of which the knowledge of a key does not allow the other key to be calculated at least in a polynomial time or a **reasonable time anyway.**

Encryption/decryption methods can be used for encrypting/decrypting digital signals of any type and **exchanged using any different communication modes and** even for signature authentication or verification.

A public-key method provides the public key to be distributed to another party with which communication has to be established, while the private key is kept confidential. The public and private asymmetric keys allow two results to be obtained. Only the party that knows and holds the private key can decrypt the massage that has been encrypted with the corresponding public key. If a party decrypts the message by using the public key such party can be sure that the message has been encrypted by using the private key and therefore it has been probably generated by the holder of the private key.

For calculating the keys public-key methods and relevant systems use the so called trapdoor functions. These functions are generally defined also as "one way" functions and are functions that are relatively easy and quick to compute in one direction, while the computation on the opposite direction, namely the inverse one is not feasible above all in polynomial time due to the high complexity.

For this type of functions currently the known methods use those based on high-complex mathematical problems.

Examples of these known problems used for functions calculating keys in the several known public-key encryption/decryption methods are:

- Integer factorization problem and that is the factorization of an integer into factors composed of prime numbers;

- Discrete logarithm problem of a multiplicative group over finite field;
- Discrete logarithm problem of elliptic curves over finite field.

Among the most common encryption/decryption systems the RSA and RABIN systems are based on the problem of factoring integers into factors composed of prime numbers. The ElGamal system on the contrary is based on the discrete logarithm problem of a multiplicative group and the elliptic curve encryption system is based on the elliptic curve discrete logarithm problem.

RSA system is described in the document US 4,405,829 and in publications mentioned therein. The elliptic curve encryption system is described in the document US 5,146,500 and in publications mentioned therein.

A summary of the several above mentioned public-key systems and of further publications studying in depth their structure is given in document EP 924895 and in document US 6,081,597

Generally public-key systems work according to the following scheme which is in common also to the method and system of the present invention.

Let A and B be two mutually communicating parties let K (pub, A) be the public key of A and K (priv A) the private key of A. Similarly K(pub, B) and K(priv, B) are the public key and private key of B respectively. Asymmetric systems provide algorithms that generate the public key and the private key of each party.

In order to communicate one with the other A sends the public K (pub, A) to B and B sends its public K (pub, B) to A. When a session private key exchange system of the type according to Diffie Hellman method is used, the two parties exchange the public keys, while the session key (called also as master key) used for encrypting and decrypting messages is composed of the key K(pub, A) + K(priv, B) for encrypting the messages sent from B to A and for decrypting messages sent from A to B and the session key (or master key) K(pub,B) + K(priv, A) for encrypting messages sent from A to B and for decrypting messages sent from B to A.

Other expedients can be used for preventing the so called MID (man in the middle) attacks. In this case identificators of the individual parties are transmitted between the two parties by the so called token mac or hmac or the parties use a certification authority. It is possible to add to the identification codes of the parties data variable over time such as date and time which make the token variable.

The main drawback of the known public-key systems is the fact that these systems by generally working by means of mathematical relations related to basic operations with prime numbers, are subjected to cryptoanalytic attacks that can lead in reasonable time to define the keys and so to the possibility of decrypting a message or to believably simulate to be the party that holds the private code.

Other specific drawbacks as regards RSA and Rabin systems are the fact that these systems use prime numbers for the factorization and therefore private keys are composed of prime numbers which require long processing time and considerable hardware resources for being determined. Therefore these systems are less practical to be used in small devices having a reduced computational power and downsized hardware as regards performances, such as for example palmtops or smartphones or other.

From document US2006/280300 A1 (of the same inventor) a cryptographic system is known which tries to overcome the above mentioned drawback related to the use of prime numbers and the corresponding high computational power required by this mode.

However the attempt described in the document US2006/280300A1 has considerable limits both as regards the need of high computational power and therefore the need of powerful, expensive and less miniaturizable hardware, and as regards processing time and as regards the security of the cryptographic system in relation to attacks intended to force the system.

In particular, in the system described in US2006/0280300 in order to create the public key ($N_1$, $N_2$,.. $N_n$) it is necessary to link each individual output value from the general function f(x) in order to obtain a key in the format as "numerical character string". Obviously in order to carry out this operation it is necessary to compensate each individual output value, up to a maximum length given by the maximum value that can be obtained from the function f(x). For example, if a maximum value of 5 digits is provided, then, values less than 5 digits have to be compensated to the left with as many zero as to arrive to 5 digits (eg: 123 becomes 00123). The opposite operation, once public keys are exchanged, is to retrieve from a string of characters the individual numerical values such to use them in the function f(x) and to derive the private key ($K_1||K_2||...K_n$) for the encryption and decryption steps. These operations slow down the process for creating the public/private key, since there is a transformation from numerical values to character type values and vice versa and therefore the possibility of using for instance a possible mathematical processor provided on the host device is not exploited. Moreover, the public/private key obtained by this method, can be very long, due to obvious security reasons, and therefore it can take a greater storage area of the host device: for example a low-power Smart Card may not support situations of such type. Finally, an implementation of this method in Hardware makes implementation steps much more complicated.

A further drawback of the system according to US2006/2803000A1 is that functions used in the method provide exact (real) output values. As regards security this can be a weakness since a cryptoanalyst by applying different mathematical attack methods can retrieve the values of one of the encryption/decryption keys.

The functions suggested in the method are "linear" functions, that is they use operations such as sum or division or multiplications alone or combined together in a manner and such to create a "non-linear" function. Unfortunately linear functions in cryptographic science are known to be not secure functions. Moreover, the fact of using an operation such as a division can lead to considerable compatibility problems in calculating floating-point values, especially on devices that have processors of different type: rounding, overflow, underflow problems, etc..., this means that encryption/decryption keys may be different and in the method no expedients is described for carrying out a check in such case.

Still with reference to functions the system according to US2006/280300A1 is vague and it does not provide explicit functions for calculating the public/private key, but it suggests that any function can be used provided that it is reversible. This can be a problem for the person who is a mere implementer and not a cryptographic science expert since the choice of the function is critical for the system security and its efficiency.

According again to a drawback the system described in US2006/280300 A1 does not provide any security measure as regards an attack known as "Man-in-the-middle".

The publication K.V.O. RABAH: "implementation of One-Time Pad Cryptography, Information Technology Journal, vol. 4, no. 1, 1.January 2005 (2005-01-01), pages 87-95, discloses a private key encryption/decryption method wherein encryption/decryption uses a function that performs an algebraic sum of the bytes forming a message and of the bytes of a secret encryption/decryption key, and said function is not a Hash function.

In document SEONGHAN SHIN ET AL: "Elliptic Curve based Authenticated Key Agreement Protocol for Wireless Security", COMPUTATIONAL INTELLIGENCE AND SECURITY, 2006 INTERNATIONAL CONFERENCE ON, IEEE, PI, 1 November 2006 (2006-11-01), pages 1096-1100, XP031 012973, ISBN: 978-1-4244-0604-3 a method is disclosed comprising:

An encryption and decryption method (see the Abstract, first sentence), comprising:

    i) a first public-key or asymmetric encryption/decryption step, comprising:

        step 1: creating the private key
        in which a private key is generated for each of at least two mutually communicating entities, which private key is known only by the corresponding entity;
        step 2: creating the public key

        wherein for each of at least two mutually communicating entities a public key is generated as a function of the private key owned by the said entity;
        the said public key being a numerical value calculated by a modulus function of the private key of the said entity;
        and further comprising the step of applying a function modifying the value of the public keys according to the relation v+rnd*p,
        in which v is the public key, rnd is a pseudo-random value and p is a random integer shared by the communicating entities;
        the said random value rnd being shared by the parties by means of an identification token exchanged only once and/or being composed at least partially of a predetermined value exchanged only once and of values variable over time and knowable to both the mutually communicating parties z by a date or a time:
        exchanging between two communicating entities their public keys summed to the said random value rnd*p

    ii) a second symmetric key encryption/decryption step, for which a secret, or session, key is provided for encryption/decryption of one or more second messages transmitted between said at least two communicating entities, comprising:
    step 3: creating the said session key,
    wherein encryption/decryption of the information of the said second message exchanged between the said at least two entities being encrypted/decrypted by performing an algebraic sum of the bytes forming the message to be transmitted and the bytes of the said session key and which function is not a hash function and is reversible.

The aim of the invention is to provide an encryption/decryption method of the type described hereinbefore that allows both processing time and **hardware resources required** for **carrying** out **the** encryption/decryption steps to be reduced, while guaranteeing a higher security of the encryption/decryption method against any type of attacks intended for retrieving the keys necessary for the message encryption/decryption.

The present invention further aims at improving an encryption/decryption method of the type described hereinbefore such to give a security level defined as "unconditional security" to the encryption algorithm.

Particularly further objects of the method according to the present invention are to provide an encryption/decryption method with the following properties:

- high security against any type of attack and in particular cryptoanalytic attacks, but also of the brute force or man in the middle type;
- simplification of hardware/software implementation
- hardware/software execution efficiency;
- possibility of creating cryptographic keys of any length usable for directly encrypting data to be treated by a symmetric encryption/decryption method
- possibility of extending the function by greater-size matrices

The invention achieves the above objects by an encryption/decryption method according to claim 1.

a first public-key step for which it is provided:

a) a first public key for each of at least two mutually communicating entities and which is exchanged between said two mutually communicating entities and which public key is used for encrypting a first message to be transmitted between said at least two mutually communicating entities;
b) a private key for each of said at least two mutually communicating entities which is used for decrypting the message encrypted using said public key and exchanged between the two communicating entities;

a second symmetric key encryption/decryption step, for which a secret (or session) key for encryption/decryption of one or more second messages transmitted between said at least two communicating entities is provided,
said secret (or session) key being exchanged between the at least two communicating entities using the first public-key encryption step and said encryption/decryption secret key forming the first message,
the trapdoor being composed of the function creating the secret key, while the second message consists of information to be exchanged between the two communicating entities and while keys are not a function only of prime numbers and wherein the public key is generated by a non-linear numerical sum function having as output always a value of the numerical type.

The public key is generated by a Hash sum modulus function using a matrix of private values, a private modulus value and a public modulus value.

The method is similar to the known Diffie-Hellman one but it does not use any prime numbers, or generally large numbers and it overcomes its drawbacks which are among those described above.

The method according to the present invention provides considerable advantages as regards the computational perspective and the cryptographic analysis and particularly:
The use of a mere "numerical sum" with an output **value from function f(x) that is always of the numerical** type leads to advantages as regards computation and occupancy of computational resources even on low power devices such as for example smart cards and it facilitates the implementation operation even in hardware as well as in software.

Dependent claims further relate to additional improvement characteristics of the method according to the invention.

By the additional characteristics of the method according to the present invention that will be described in detail below the following advantages are obtained in relation to prior art known methods and systems:

The method of the present invention uses as output from the function f(x) a random masking value. This is a strength as regards security. It is certain that it is more complicated to carry out a mathematical attack aimed at retrieving the values of one of the keys for encryption/decryption;
The method uses and provides highly "non-linear" functions by using operations such as rotations/shifts of bits combined with a sum and a multiplication (for example hash functions are non-linear functions);
The functions mathematically provide integer values;
It uses specific functions for calculating the public/private key by providing exact specifications for their implementation;
The method provides an identification process (ID token) which is specifically directed to an attack known as "Man-in-the-middle".

Moreover, the method, by nature, is not subjected to any known mathematical attack. The attacks of Side Channel Attack type are ineffective due to the speed and linearity of the implemented algorithm.

The H sum modulus function (H is a non-perfect hash function) uses a two-dimensional matrix $A_{mxn}$ of m rows and n columns of private values, a private modulus value q, a public modulus value p and a public value R expressing the dimension of the matrix A, that is the number of rows that will contain the private key values, for creating a public numerical key according to the function

$$\text{Public key } S = \left[ \sum_{i=1}^{R} f(x) \right] + rnd * p$$

where:

$f(x)$ is a non-perfect hash function and in particular a function modulo q whose inputs are the values of the matrix A with $1 \leq Ai, j \leq n$, values p and q and R;

The non-perfect Hash function aims at obtaining identical output numerical values from different arguments.

q corresponds to value rnd*p;

$S$ is the result of the summation $\forall i = 1,...,n, p \in Z$

A is the matrix mxn Vm, $n = 1, ... , n \in Z$

$i$ is an iterator index with $i \in Z^+$

$p$ is the shared modulus value, a random integer with $p \in Z^+$ (*shared by the communication participants*).

*rnd* is a random number (generated by known functions or by property functions) used, as explained above, for introducing random quantities in S.

The private key is composed of the matrix $A_{mxn}$ p and R are two public values agreed by the communicating parties or which are predetermined during setup of the encryption/decryption system q is defined by each entity by a pseudo-random generator according to a predetermined fixed process of the encryption/decryption method and system.

The same values that is the matrix A and the modulus q and p and R are used again for generating the shared cryptography key namely the session key.

The fact of producing an attack involves the knowledge of the values of matrix A, of modulus q and the time sequence generating the values of the matrix. If the number of elements in the matrix is high enough (minimum R of 32) the cost for producing a brute-force attack is prohibitive.

For example given the following number as public key 7281919011861039825731 and a known modulus P, the fact of obtaining the numerical sequence expressing the cryptographic key is not a banal problem, in complex problem field. One has to obtain all the values of the matrix that has been generated and that represents an arrangement (with possible repetitions) within a range of integers ranging from $-2^n$ and $+2^n$, where n is the number of bits forming the number.

Accordingly the length of the key can be determined from the value of n and from the number of elements of the matrix.

The keys exchanged for the next cryptographic step are fictitious keys such that the value thereof will never be able to coincide with a possible real key, this means that the possible keys exchanged and intercepted are keys that have no real value from the mathematical perspective and any examination thereof is null. The real keys are formed by the legitimate communicating parties using the fictitious key in combination with their own private key.

EXAMPLE

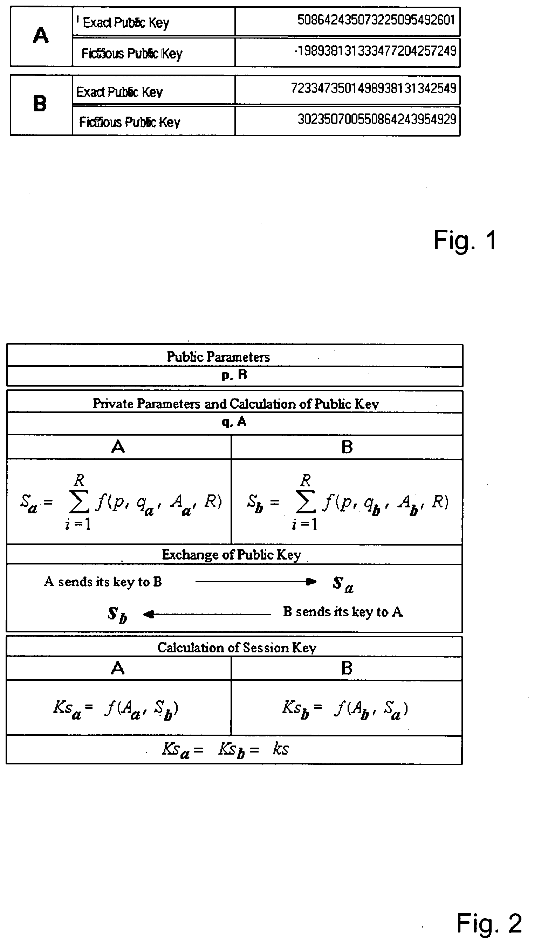

The public key of real value v could be sent with fictitious value v+rnd*p as shown in figure 1.

This transformation considerably complicates a possible analysis for retrieving the numerical value representing the real public key.

The value p is a public value, while rnd value can be shared between the parties with a token or a part thereof can be defined a priori, while a remaining part can be composed of values variable over time such as date, time or other data.

With reference to the characteristics of the method according to the main claim and the dependent claims, an essential characteristic of the method according to the present invention is the fact of not using mathematical relations with prime numbers during the key calculating **steps. While in known systems such as RSA, DH and ECC the** latter are essential for the system itself. In the method according to the present invention each value (usually n-bit number) is a valid number. This has positive effects in the designing phase, since in the method according to the present invention, the specific function remains isolated while in systems such as RSA, DH and ECC it is necessary to provide (complicated and slow) algorithms for creating prime numbers that have to be perfect and not pseudoprimes since such pseudo prime numbers are a problem as regards security.

Often in cryptographic systems implementing RSA or DH (Diffie Hellman) particularly the tendency is to use a small subset of prime numbers pre-calculated and randomly used in the specific functions. This leads to problems as regards security.

As it will be more clear even from the following detailed description, algebraic operations used in the method according to the present invention and that are sum, bit rotations, multiplications and n-bit modulus operations are among the fastest ones on many n-bit **hardware platforms, currently with n of 32 or 64 bits** even with moderate speed processors. This characteristic is important as regards cryptoanalytic attacks based on power consumption when executing the algorithm in the step creating the public and session key (power monitoring attack and timing attack).

Moreover the operations used allow the system to be integrated by using high-level programming languages, that notoriously are not very rapid.

Finally, the method according to the present invention provides a higher efficiency in terms of computer overhead, key size and bandwidth, with respect to other systems.

As regards security, the method and system according to the present invention belong to the class of so called NP-complete combinatorial problems.

The method and system according to the present invention use a "non-perfect hash" function which is recursively called for creating a value given by the sum of all the values of the private key forming the matrix A and modulus q and which result in creating the public key.

The choice of this type of function leads to output values that, with a good chance, can be equal. Therefore the sum of different input values to the function in different time or calculated by different entities, can give equal output values. This has considerable effects on the security level, since, public keys with non univocal values lead, from the statistical perspective to "uncertainty" and consequently the algorithm has the "unconditional security" property. A cryptographic system is considered as being unconditionally secure if it cannot be attacked even by computationally infinite resources.

This means that cryptoanalysis is impossible and that even by trying any possible key in a brute-force attack it would be impossible to define the correct one. Therefore, the problem is based on the difficulty of finding in a polynomial time the permutation and the exact values of the private key (contained in matrix A and modulus value q) starting from the knowledge of a summation S calculated from such values. On the contrary, RSA, DH, ECC are processed on mathematical bases that allow efficient algorithms to be implemented for solving them together with progresses in the performance of the current and future processors.

The token is not calculated during the step creating the public keys (as in SRP protocol), but when calculating the session key. If the hash value of the session key is not equal for all the communicating entities, probably a Man in the middle attack has been performed. Therefore usually, when sending a message encrypted with the common session key, even the hash value of the key is sent for immediately verifying the equality. It is impossible to define the Token value from Hash value.

According to a further improvement, the present invention in combination with the public-key method relates also to a preferred private-key method that can be used for performing the second step of the present method or can be used also independently as a symmetric encryption/decryption method, namely a private or secret key one.

According to the present invention, this symmetric method for the encryption/decryption provides the use of a function performing an algebraic sum of the bytes forming a message or the data to be encrypted and the bytes of a given encryption/decryption secret key and which function is not a hash function.

Substantially, the main operation on which the algorithm is based is an "algebraic sum" of the bytes forming a message and the bytes of a specific key (with a variable length) and it bases a great part of the security on the statistical properties offered by a general algebraic summation (equiprobability and uncertainty).

The problem to be solved, and representing the trapdoor is as follows:

Given the message block mi = ( $b_0, b_1, b_2, ......b_n$) of n bytes and a key

$K_i$ = ( $k_0, k_1, k_2, ......k_n$) of n bytes define $b_0, b_1, b_2, ......b_n$ from the following summarizing relation:

$$S_i = fmix[ \sum_{i=0}^{n-1} (sub(bi \oplus ki) , ki), pi, qi]$$

Therefore, S being known define $b_0, b_1, b_2, ......b_n$.

In the computational complexity theory this relation is a NP-complete problem. This function can be compared, with the proper distinctions, to a f one-way function: that is if it is easy to calculate $S = f(x)$ then it is computationally hard to calculate $x = f^1 (S)$.

A property of S is that S is always a value representable with 8-bit.

Therefore each block m to be encrypted, observing the length condition $m \leq 1024 bit$ is "contained" in 8-bits.

The encryption fraction can be expressed in percentage, in relation to a maximum value of 8-bit, in proportion to the block to be processed: if for example the block is composed of 128-bit (16bytes) a cryptoanalyst has 6.25% of bits available and for a block of 256-bit (32 bytes) he/she has 3.125% of bits available. Accordingly the longer the block is the higher the security provided by the algorithm is.

It has to be noted that the encryption function is not a data "compression function" or a hash function. With reference to the latter, it is just the opposite: the encryption function tends, probabilistically, to provide S such that for different messages/keys it can provide equal values.

All the permutations regarding a block of n distinct or repeated values, n!, thanks to the property of the algebraic sum, gives the same S as the result.

Due to the mathematical complexity in extracting addends (bytes of a general message) from a generic algebraic sum S and in the exact order of the original permutation, the encryption function uses a method that duplicates, in the encryption step, the message m, such to make the encryption step reversible.

The present symmetric method is a block cipher belonging to the class of private-key ciphers.

The cryptographic system is a novelty in private-key algorithms. The aim upon which this encryption/decryption symmetric method is based is to provide a dedicated encryption system that is rapid, highly secure namely resistant against cryptographic analysis, particularly to linear and differential one and easy in hardware/software implementation.

This symmetric encryption/decryption method is mainly studied for high-speed hardware/software applications for protecting classified messages and it is dedicated to encrypt radio signals such as for example Prr (Personal role radio) devices and the like, audio/video transmissions such as videoconferences, and it is particulary suitable for small messages (such as military messages, banking data and the like for example).

The invention relates also to an encryption/decryption method based on asymmetric and/or symmetric method mentioned above and an encryption/decryption device comprising a program loaded in the memory of a computer and adapted to be executed by said computer wherein the execution of the program causes the execution of the method steps according to one or more of the characteristics mentioned above and claimed and regarding the asymmetric and/or symmetric encryption/decryption method.

Moreover the invention relates also to a storage medium readable by a processing unit, upon which medium a program executable by said computer is stored, whose execution causes the execution of the method steps according to one or more of the characteristics mentioned above and claimed and regarding the asymmetric and/or symmetric encryption/decryption method.

With reference to the method, the system, the device described above is has to be noted that the transmission of the public key can occur also in a graphic form, as an image or graph.

Further characteristics of the invention are the object of the subclaims.

Characteristics of the invention and advantages thereof will be more clear from the following description of embodiments wherein the method is defined by a more strict mathematical formalism and by the help of annexed figures wherein:

Fig. 1 is an example of real and fictitious graphic public key for two mutually communicating parties.

Figure 2 sumps up the steps creating the public keys and the private ones and the process for exchanging them, as well as the step for calculating the session key actually used for the encryption/decryption.

Fig. 3 is two public keys exchanged between two mutually communicating entities and the re-construction of the common secret or private encryption and decryption keys to be used with the symmetric encryption and decryption algorithm in the second step of the method and system according to the present invention.

Fig. 4 is the average power consumption of a processing device executing said algorithm for the known RSA or Diffie/Helmann algorithm and the for algorithm used in the method according to the present invention respectively.

Figure 5 is a window of an encryption system executed on a server and a client in communication one with the other wherein the system is made according to the present invention.

Figure 6 is the windows similar to those of figure 5 in a condition wherein the identification token ID token is set in a wrong way in the client.

Figure 7 is the flow diagram of a symmetric encryption system.

Fig.8 is a table comparing the time necessary for creating the key in the known encryption systems and in the system according to the present invention.

Fig.9 is a table of the equivalences of the key lengths for the different known cryptography public-key systems and for the system according to the present invention expressed in bits.

The method and the system implementing said method according to the present invention uses a H sum modulus function. The method is similar to the known Diffie-Hellman one but it does not use any prime numbers, and generally no large numbers as well.

The H sum modulus function is a non-perfect hash function and it uses a A matrix of private values, a private modulus value q and a public modulus value p for generating a public numerical key and the same values that is the matrix A and the modulus q and p, are used again for generating the shared encryption/decryption key (sessione key).

The matrix that is used is a two-dimensional matrix whose values start from a minimum of $2^8$, the same applies to the choice of the modulus q and value p. The number of rows R of the matrix can be arbitrarily selected in the range: $32 \leq R \leq 256$

The method according to the present invention is based on the self-construction of the encryption/decryption key which occurs by using a public key transmitted from each entity of the mutually communicating entities to the other entities.

After exchanging the public keys between two or more mutually communicating entities, each of said entities has the material for creating the secret encryption key (or session key) to be used in combination with any symmetric key algorithm (private key) for encrypting/decrypting any messages in the binary format. The algorithm intended for generating the key has a particular characteristic, according to which each entity uses a vector of private values that has never been used during the public key generating step. This characteristic gives considerable security since the key is enriched with material known only to each individual entity. Let suppose, by absurbdity, that an attacker is able to accidentally retrieve the values of the private key of at least two mutually communicating entities, it should necessarily retrieve the values of this vector and their exact permutation in order to reconstruct the encryption/decryption key. This possibility is very unlikely to occur since these values are never transmitted but, they are simply considered when constructing the private or session key. Other known public algorithms do not have such characteristics since the mathematical formulation does not allow the basic function to be changed for creating the session keys.

Figure 1 shows an example of a real public key and of the corresponding fictitious public key of two mutually communicating entities respectively denoted by A and B.

The generation of the fictitious key occurs by using a function modifying the real value of the public key v according to the relation v+rnd*p, wherein rnd is a pseudo-random value generated by the system and p is a value defined as above. The rnd value is generated by a pseudo-random generator from the same seed composed of a value shared by the parties by means of an indentification token exchanged only once and/or composed at least partially of a predetermined value exchanged only once and of values variable over time and knowable to both the mutually communicating parties.

The encryption/decryption method provides several steps that will be described below by using a more strict and precise mathematical and pseudocode notation.

As shown in table of figure 2, the system provides public parameters and private parameters. Public parameters are composed of values p and R and private ones of values q and A.

A first step is to generate the private key composed of the matrix $A_{nxm}$ and value q:

Let $A_{nxm}$ be a matrix. Matrix $A_{nxm}$ is initialized as it follows if we denote by r the general row of the matrix and by p ($p \in Z^+$) a value representing the modulus shared by the communicating parties, that is the public value p:

$A_{r,0} = rnd$ with $A_{r,0} \in Z$ and $1 \leq r \leq R$
$A_{r,1} = rnd * p$ with $A_{r,1} \in Z$ and $1 \leq r \leq R$
$q = rnd * p$ with $q \in Z^+$

The following constraints being provided:

$q \neq p; A_{r,0} (mod\ p) \neq 0$ and $A_{r,0} > q$

where: $A_{r,0}$ and q are private random values and q in particular is used as the reduction value modulo q in function $f(x)$ with the aim of uncorrelating the value of the session key from the values of matrix $A_{nxm}$.

The value q is automatically generated during the method steps and by the system carrying out the method according to the present invention.

The value of the shared modulus p also automatically generated or predetermined in the initial setup of the method and of the system guarantees the function used by the communicating parties to provide the common encryption/decryption key. Therefore the only value known to a possible attacker is p together with values of public keys S.

The trapdoor is inherent in the function generating the encryption/decryption key that will be defined in more details below.

Once the private key is generated it is possible to generate the public key by using the steps defined by the following mathematical relations.

The mathematical relation expressing the summation *S* and that represents the public key is given by:

$f(x)$ is a function modulo q whose inputs are the values of matrix A with $1 \leq Ai, j \leq n$, values p and q and R.
q corresponds to the value rnd*p
*S* is the result of the summation $\forall i = 1,..., n, p \in Z$
A is matrix mxn $\forall m, n, = 1, ..., n \in Z$
*i* is a iterator index with $i \in Z^+$

*p* is the shared modulus value, a random integer with $p \in Z^+$ *(shared by the communication participants)* .
*rnd* is a random number (generated by known functions or proprietary functions) used, as explained above, for introducing random quantities in *S*.

The private key is composed of the matrix $A_{mxn}$ p and R are two public values agreed by the communicating parties or which are predetermined during setup of the encryption/decryption system q is defined by each entity by a pseudo-random generator according to a predetermined fixed process of the encryption/decryption method and system.
The method is flexible as regards the design and it is independent of the random value generating function. Therefore, random values can be obtained by using PRNGs (Pseudo Random Number Generator) o TRNGs (True Random Number Generator) selected among the most cryptographically secure ones and they can be implemented in the present invention according to the specifications related thereto. For example it is possible to use PRNG included in specifications ANSI X9.17.
It is possible to replace in any time the implemented generator (by selecting it among the most promising in the prior art) without any consequences for the compatibility for the device included in the present invention.
The random quantity, it has to be noted, is given by *rnd * p* such that the encryption/decryption common key can be obtained (that can be defined also as inverse function according to a not strictly mathematical notation). For a characteristic of modular algebra we have: $n \cdot p(\bmod p) = 0$ therefore, this guarantees the function to be correct and independent of *rnd.*
The multiplication of the matrix by the index *i* leads to output permutation, important for the sequence creating the key and for a possible randomly selected subset thereof.
The function *f(x)* for creating the public key and the common encryption/decryption key (in some parts of the text for brevity reasons defined by the term inverse function in a not canonical form) according to the preceding relation can be advantageously selected among the following groups:

First group

$$f(x) = \{[(A(r,0) <<< w_1) + (A(r,0) >> w_2)] * (i + w_3)\} \bmod q$$

$$f(x) = \{[(A(r,0) >>> w_1) + (A(r,0) << w_2)] * (i + w_3)\} \bmod q$$

$$f(x) = \{[(A(r,0) <<< w_1) + (A(r,0) << w_2)] * (i + w_3)\} \bmod q$$

$$f(x) = \{[(A(r,0) >>> w_1) + (A(r,0) >> w_2)] * (i + w_3)\} \bmod q$$

Second group:

$$f(x) = \{[(A(r,0) << w_1) + (A(r,0) >>> w_2)] * (i + w_3)\} \bmod q$$

$$f(x) = \{[(A(r,0) >> w_1) + (A(r,0) <<< w_2)] * (i + w_3)\} \bmod q$$

$$f(x) = \{[(A(r,0) << w_1) + (A(r,0) <<< w_2)] * (i + w_3)\} \bmod q$$

$$f(x) = \{[(A(r,0) >> w_1) + (A(r,0) >>> w_2)] * (i + w_3)\} \bmod q$$

Any selected function has to be completed by the following expression: *f(x) = f(x) + rnd * p* In the above expressions $w_1$ and $w_2$ designate integer values in the range from 1 to 31 for 32-bit processors and 1-63 for 64-bit

processors.

$w_3$ is an integer value in the range from 1 to 32bit for 32-bit processors and 1-64 for 64-bit processors.

The symbols <<, >>, <<<, >>> represent bit-shift left operations by $w_2$ positions, bit-shift right operations by $w_2$ positions, bit-rotate left operations by $w_1$ positions and bit-rotate right operations by $w_1$ positions respectively.

The table of figure 2 shows the two public keys calculated according to what previously described for A and B.

Once public keys are calculated, A sends its public key to B and B sends its public key to A.

The third step provides the steps for creating the encryption/decryption private key called also as session key.

The function for creating the session key (defined in some parts of the description and of the claims for brevity also as inverse function $f^{-1}(x)$ improperly using the mathematical term) can be selected among the following groups:

First group

$$f(x) = \{[(A(r,0) <<< w_1) + (A(r,0) >> w_2)] * (i + w_3) + A(r,1)\} \bmod q$$

$$f(x) = \{[(A(r,0) >>> w_1) + (A(r,0) << w_2)] * (i + w_3) + A(r,1)\} \bmod q$$

$$f(x) = \{[(A(r,0) <<< w_1) + (A(r,0) << yw_2] * (i + w_3) + A(r,1)\} \bmod q$$

$$f(x) = \{[(A(r,0) >>> w_1) + (A(r,0) >> w_2)] * (i + w_3) + A(r,1)\} \bmod q$$

Second group

$$f(x) = \{[(A(r,0) << w_1) + (A(r,0) >>> w_2)] * (i + w_3) + A(r,1)\} \bmod q$$

$$f(x) = \{[(A(r,0) >> w_1) + (A(r,0) <<< w_2)] * (i + w_3) + A(r,1)\} \bmod q$$

$$f(x) = \{[(A(r,0) << w_1) + (A(r,0) <<< w_2)] * (i + w_3) + A(r,1)\} \bmod q$$

$$f(x) = \{[(A(r,0) >> w_1) + (A(r,0) >>> w_2)] * (i + w_3) + A(r,1)\} \bmod q$$

where : $w_1$ **and** $w_2$ **are integer values in the range** from 1 to 31 for 32-bit processors and 1-63 for 64-bit processors.

$w_3$ is an integer value in the range from 1 to 32bit for 32-bit processors and 1-63 for 64-bit processors.

The symbols <<, >>, <<<, >>> represent bit-shift left operations by $w_2$ positions, bit-shift right operations by $w_2$ positions, bit-rotate left operations by $w_1$ positions and bit-rotate right operations by $w_1$ positions respectively.

Values $w_1$, $w_2$, $w_3$ are predetermined during setup of the method and system and they do not need to be indicated each time by the user but they are automatically used.

The possibility of selecting the function creating the public key and the session key for example among the ones listed above gives advantages as regards the security, since, a not-known or half-known function creates more difficulties as regards an exhaustive force attack compared on the contrary to a function that is known and easy to be re-programmed. RSA, DH, ECC do not have such characteristic, since the mathematical nature thereof does not allow it.

Moreover as regards the above mentioned pseudocode according to a further characteristic, the function f(x) is the same used both for computing public keys and for computing the session key (that is for encryption and decryption).

It has to be noted that in this last step the added element is the public key of A or B which is combined with the private key (the matrix Anxm) of A or B.

The size of the key (expressed in bit) is calculated by the following relation:

$$l = m \, {}^{\star} \, n \, {}^{\star} \, w$$

where m is the number of the rows of the matrix, n is the number of columns and w the size of the word expressed in bit (32 bit, 64 bit, etc).

For example for a matrix $A_{mxn}$ with m=4, n=2 and w=32 we will have a private key of 4*2*32 = 256bit.

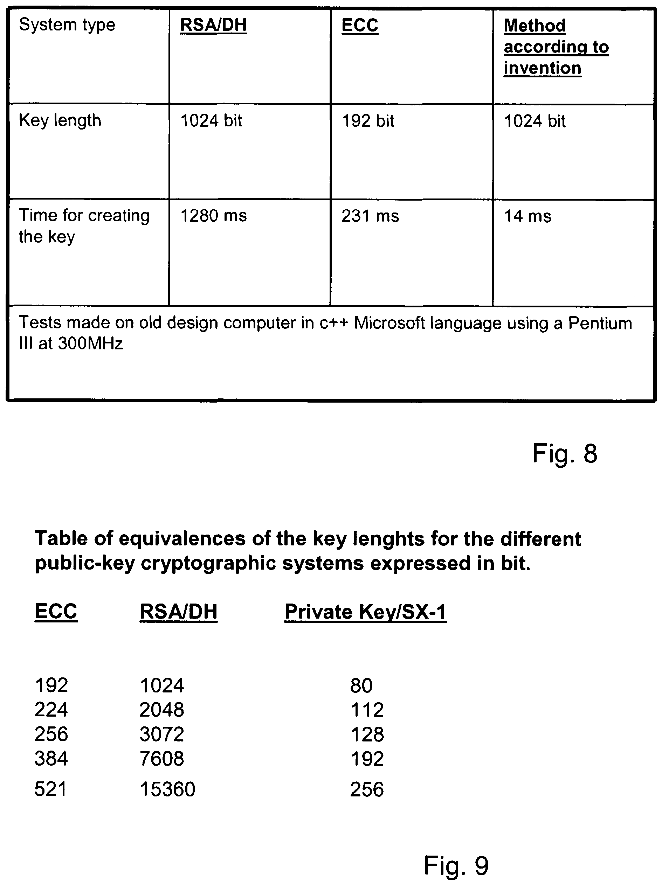

As it results from the above relation, the length of the public, private and session key is variable, such to be adapted to different security levels. Unlike systems like RSA, DH, ECC where it is advised to have at least a length of 2048 bits for the first two and about 230 bits for the ECCs and so a remarkable need for computational resources, especially for RSA/DH the method according to the present invention is simply equivalent to a private-key system as regards the size and the relevant security. Accordingly the method of the present invention requires low computational resources even for computing large keys that is keys ranging from at least 256 to 4096 bits. Figure 8 shows a comparative table for the mentioned systems.

For example considering a small vector of 8 32-bit elements (the values forming the session key) the method of the present invention is able to provide 8x32-bit keys (256 bit).

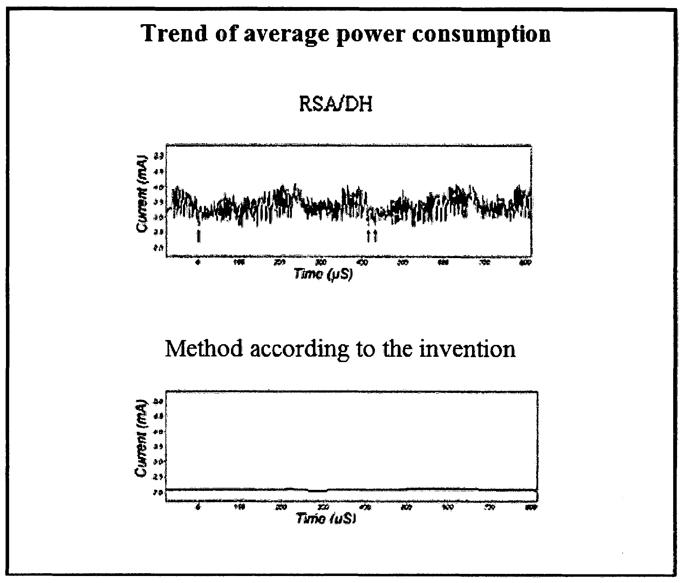

Algebraic operations that are used and that essentially are the sum, bit rotations, multiplications and n-bit modulus operations are among the most rapid ones on many hardward platforms with modern n-bit processors (32/64-bit), but also with old generation processors and having a moderate speed. This characteristic is important as regards cryptoanalytic attacks based on the power consumption during the execution of the algorithm in the step creating public and session keys (power monitoring attack and timing attack). A comparison of known algorithms, of the same category, such as RSA and DH shows that the algorithm used in the method according to the present invention has a regular and constant trend in the power consumption in comparison to the latter. Figure 8 shows the results of the trend of the average power consumption with RSA/DH systems and with a system working according to the method of the present invention respectively while figure 4 shows the time for creating a key. As it can be noted the power consumption in the case of the present method and system is very lower and quasi-linear than RSA/DH systems particularly.

In figure 2 this operation is highlighted by the relations:

$Ks_A = f\,(A_A,S_B)$ and $Ks_B = f\,(A_B,S_A)$, where $S_A$ and $S_B$ are the public key of A and B respectively and wherein $A_A$ and $A_B$ are matrices A representing the private key of A and B respectively.

The session key used for encryption and decryption of messages exchanged between A and B according to any encryption/decryption method or algorithm is denoted by ks.

As it is clear from above, the method and the system according to the present invention belong to the class of NP-complete problems with a particular reference to the class of combinatorial problems.

The algorithm uses a "non-perfect hash" function called recursively for creating a value given by the sum of all the n values of the private key and which result in the creation of the public key.

As already highlighted above with reference to figure 1, the keys exchanged for the following encryption/decryption step are fictitious keys (such that the value thereof can never coincide with a possible real key), this involves that any keys exchanged and intercepted are keys that have no real value from the mathematical perspective and any examnation thereof is null. The real keys are composed by the legitimate communicating parties using the fictitious key in combination with their own private key.

EXAMPLE

The public key of real value v could be sent with fictitious value v+rnd*p as shown in figure 1.

This change remarkably complicates a possible analysis for retrieving the numerical value representing the real public key.

The key exchange occurs by the same mode of Diffie-Hellman protocol as pointed out in figure 2, but, unlike the latter the public, fictitious keys exchanged can generate a theorically infinite random numerical sequence and that represents the real key, that is the session key for coding and uncoding messages.

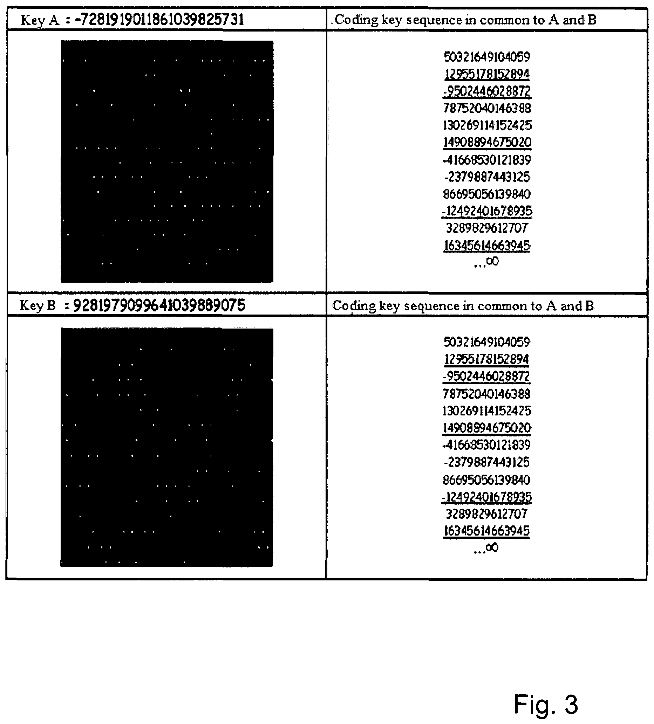

The example in figure 3 shows how such sequence is obtained from the exchange of two keys.

It has to be noted that the numerical sequence of the example is limited due to obvious space reasons.

It has to be noted that actually such sequence can be theorically infinite and it is possible to select a fraction of such sequence for determining the coding key.

Therefore in the practice it is possible that the exchange occurs theorically only one time and then, according to any algorithm generating integer random values for taking the values for obtaining the session key it is possible to select a fraction of the generated sequence corresponding to the values underlined in the figure. This condition shows how it is complicated for an attacker to retrieve the shared coding key, even if, by absurbdity, it would be able to retrieve the timing keys of the communicating entitites.

The determination of which values of the sequence are the correct ones usable as session keys is defined by a token shared between the two entities or by a shared resetting of parameters of the method or system defining the choice of the values of said sequence. Advantageously the shared value is composed of the seed (value) generating a pseudo-random value defining the value sequence of the vector to be considered as valid session keys and that are underlined in figure 3.

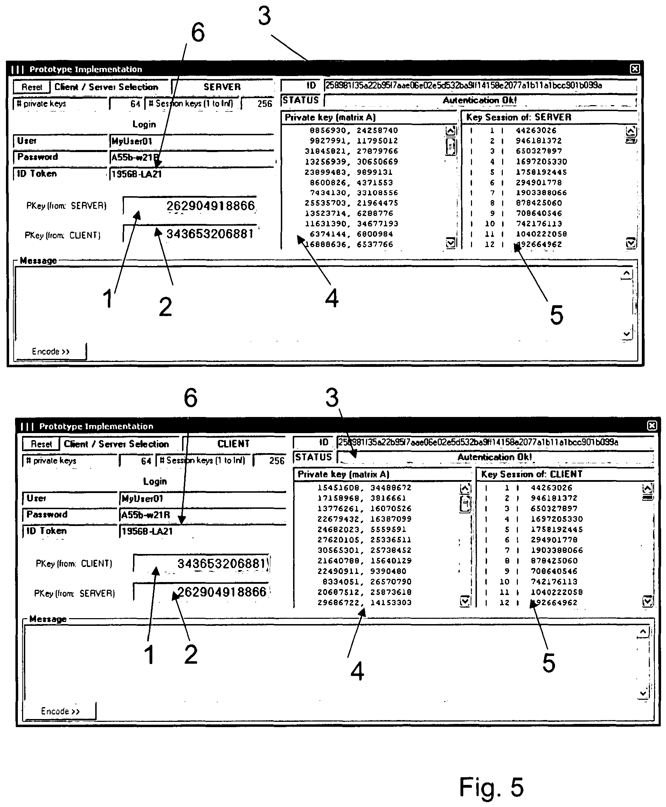

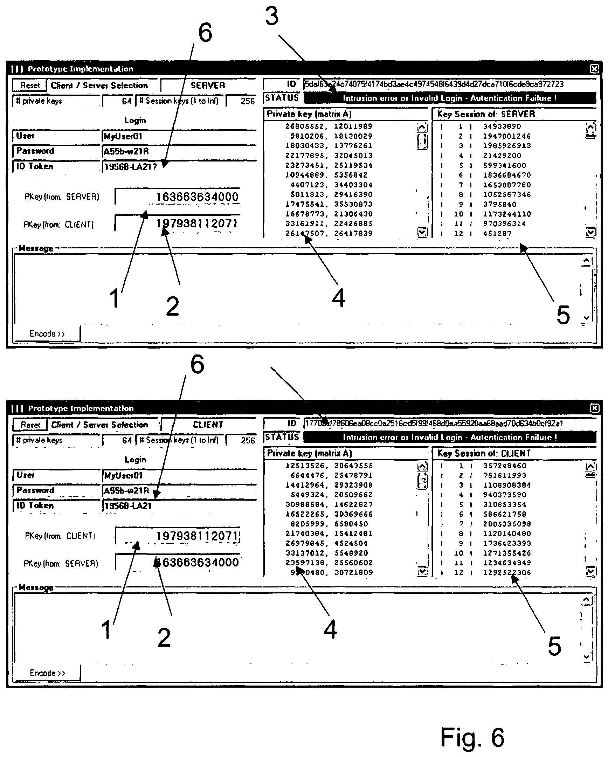

Figures 5 and 6 show an example for carrying out the method composed of a program executed by a server and a client communicating one another. In this case boxes 1 and 2 denote the values of the public keys of the server and of the client that have been exchanged one with the other. The box 6 denotes the ID token. Box 4 shows the values of the matrix constituting the private key of the server and of the client respectively. It is clear that matrices are two column type and the values are different for the server and the client. Box 5 shows session key and box 3 the authentication status of the client at the server.

Figure 6 shows the same windows for which the ID code of the client is indicated as wrong and therefore the system has not been able to calculate the session key for the client and the status indicated is that of potential intrusion in the status box 3. Moreover box 5 wherein the session key appears shows how the values are different in the server and in the client.

As shown above the method according to the present invention described up to now is the first public-key step by means of which a private key is transmitted for carrying out encryption/decryption operations of data, messages, or the like according to a symmetric key method, that is a private-key one.

In combination with what described above and that serves for allowing two or more mutually communicating entitites to exchange private keys it is possible to use any type of symmetric encryption/decryption system, that is private-key one.

As a preferred example, the invention provides to use an innovative symmetric encryption/decryption method with respect to prior art ones.

The innovative method is a block encryption/decryption method belonging to the category of private-key ciphers suitable mainly for high-speed hardware/software applications for protecting classified messages, for encrypting radio signals for example Prr (Personal role radio) devices and the like, audio/video transmissions such as videoconferences. The method and the corresponding system working according to this method is provided for small messages such as for example military messages, banking data, and the like.

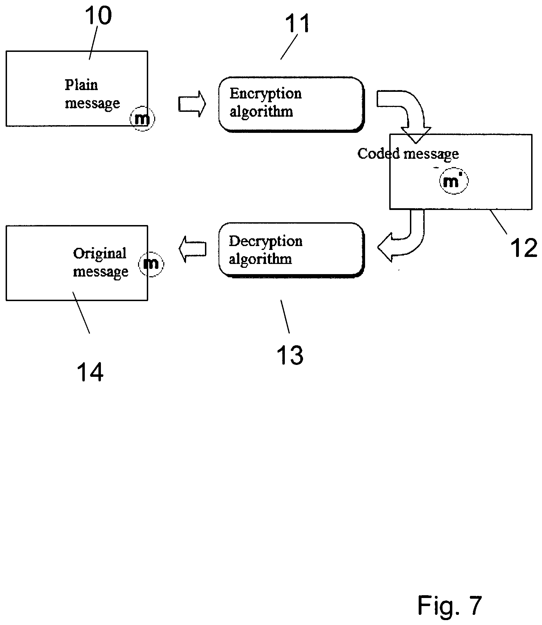

Figure 7 shows a flow diagram of a generic symmetric encryption/decryption method. A plain message m provided at step 10 is subjected to encryption at step 11 with an encryption key obtaining as output at step 12 the encrypted message m*. This encrypted message subjected to decryption at step 13 by a decryption algorithm using the same key used for the encryption provides as output 14 the message m in the original form.

The algorithm is based on an "algebraic sum" of the bytes forming a message to be transmitted and encrypted/decrypted and the bytes of a given key (having a variable length) and it bases most of the security on the statistical properties provided by a generic algebraic summation which consist in equiprobability and uncertainty.

The trapdoor that gives security against attacks of the symmetric method is based on the following mathematical problem:
given the message block mi = ( $b_0$, $b_1$, $b_2$, ......$b_n$) of n bytes and a key $K_i$ = ( $k_0$, $k_1$, $k_2$, ......$k_n$) of n byte define $b_0$, $b_1$, $b_2$, ......$b_n$ from the following summarizing relation:

$$S_i = fmix[ \sum_{i=0}^{n-1} (sub(bi \oplus ki) , ki), pi, qi]$$

Therefore, $S$ being known define $b_0$, $b_1$, $b_2$, ......$b_n$.

In the computational complexity theory this relation is a NP-complete problem. In formal terms and with the proper distinctions the above function can be compared to a f one-way function, since if it is easy to calculate $S = f(x)$ then it is computationally hard to calculate $x = f^1 (S)$.

A property of $S$ is that $S$ is always a value representable with 8-bit.

Therefore each block m to be encrypted, observing the length condition $m \leq 1024 bit$ is "contained" in 8-bits.

The encryption fraction can be expressed in percentage, in relation to a maximum value of 8-bit, in proportion to the block to be processed. If for example the block is composed of 128-bits (16bytes) a cryptoanalyst has 6.25% of bits available and for a block of 256-bits (32 bytes) he/she has 3.125% of bits available. Accordingly the more the block is long the higher the security is provided by the algorithm.

The above mentioned encryption function is not a data compression function or a hash function, but on the contrary with reference to the latter, it is just the opposite since the encryption function tends, probabilistically, to provide S such that for different messages/keys it can provide equal values.

The encryption function can be usually used for short messages and it consists in a function that executes an algebraic sum of the whole encrypted block generated such to represent the whole n-bit block in only 8-bit, for blocks long up to 1024-bit according to the following summarizing relation:

$$S_i = fmix\left[\sum_{i=0}^{n-1}(sub(bi \oplus ki)\,,\,ki),\,pi,\,qi\right]$$

Where:

> $fmix$ is a summmation mixing function modulo 8-bit that uses two keys $p_i$, $q_i$;
> $p_i$, $q_i$ are values predetermined and obtained as it will be described below in the scheduling process
> sub is the substitution function of an individual byte as shown in the diagram of a next example and at step 3 described below;

The aim of the mixing function is to create a very high "diffusion" in each encrypted block.

> $k_i$ is the i-th key in the Xor function;
> and in the substitution function;
> $b_i$ is the i-th byte of a general message.
> $S_i$ is the i-th byte of the encryption function.

The encryption step occurs in four steps:

> Step 1. Binary sum (mod 2) with key $k_i$;
> Step 2. Original algebraic sum;
> Step 3. Individual byte substitution and sum of the individual bytes;
> Step 4. Application of $fmix$ function

Now the steps will be described more in details and in a formal manner by using a pseudocode language which is perfectly intelligible to people skilled in the art and particularly to people having a fund of basic knowledge in mathematics and computer science. The pseudocode language expresses more clearly and univocally the encryption steps and operations.

When using the symmetric encryption method described now in combination with the asymmetric method described above the key used for encryption/decryption has been transmitted to the communicating entitites by using the public-key encryption/decryption method constituting the first step of the combined encryption/decryption method. The private key now is in possession of the entitites that can use it both for encrypting messages to be transmitted and for the decryption, that is for converting a received encrypted message into a plain message which encryptions and decryptions are performed by the private key according to the encryption and decryption symmetric method described here.

The method and the relevant symmetric encryption/decryption system can also be used separately from the asymmetric method as a conventional symmetric encryption/decryption method without providing the initial step transmitting the private key by the above mentioned asymmetric method. Even in such conditions the symmetric method has advantages with reference to known methods both as regards the speed, and the security against attacks.

With reference to the steps in details:

Step 1. Binary sum (mod 2) with key $k_i$:

> *For i = 0 To N - 1 do:*

$$b_i = b_i \oplus k_i$$

> *Next*
> Where $\oplus$ *is the sum function modulo 2 (or exclusive)*
> $k_i$ is the i-th key byte in the sum function modulo 2;
> $b_i$ is the i-th byte of a general message.
> For each byte the above defined function is performed.

Step 2.Original algebraic sum:

*For i = 0 To N - 1 do:*

$$S_0 = S_0 + b_i$$

*Next*

Where $S_0$ is the original summation (without substitution) of the first N bytes provided in the block to be encrypted.
3.Substitution of the individual byte in the block and subsequent summation:
*For i = 1 To N - 1 do:*

$$S_i = S_0 - b_i + k_i \qquad \text{(it substitutes } k_i \text{ for } b_i\text{)}$$

(it substitutes $k_i$ for $b_i$)
*Next*
Where $S_i$ is the i-th summation of the bytes in the i-th block
4.Application of the mixing function *fmix For i = 1 To n-1 do*

$$fmix \ S_i, \ S_{i-1}, \ p_i$$

*Next*
*For i = n - 2 To 0 Step -1*
*fmix $S_i$, $S_{i+1}$, $q_i$*
*Next*
Where *fmix* is the mixing function of the i-th summation.
In order to better undestand how the algorithm used in the present symmetric encryption method works an example is shown below of a scheme of the substitution step applied to a 8 byte block (that is 64-bit) as it follows:

$$S_0 = b_0 + b_1 + b_2 + b_3 + b_4 + b_5 + b_6 + b_7$$

$$S_1 = b_0 + \mathbf{k_1} + b_2 + b_3 + b_4 + b_5 + b_6 + b_7$$

$$S_2 = b_0 + b_1 + \mathbf{k_2} + b_3 + b_4 + b_5 + b_6 + b_7$$

$$S_3 = b_0 + b_1 + b_2 + \mathbf{k_3} + b_4 + b_5 + b_6 + b_7$$

$$S_4 = b_0 + b_1 + b_2 + b_3 + \mathbf{k_4} + b_5 + b_6 + b_7$$

$$S_5 = b_0 + b_1 + b_2 + b_3 + b_4 + \mathbf{k_5} + b_6 + b_7$$

$$S_6 = b_0 + b_1 + b_2 + b_3 + b_4 + b_5 + \mathbf{k_6} + b_7$$

$$S_7 = b_0 + b_1 + b_2 + b_3 + b_4 + b_5 + b_6 + \mathbf{k_7}$$

$k_1, k_2, ...k_7$ are substitution key values relevant to the byte of each individual sum and obtained as shown in the step scheduling the session key (it has to be noted that ko is never used in the substitution step as it has no importance in the method) . All the sums from $S_0$ to $S_7$ are 8-bit sums.

The inverse function is easy to obtain as the difference between $S_0$ and $S_1...S_7$, after having annulled the substitution value X therefore:

$$b_0 = S_0 - (S_1 - k_1)$$

$$b_1 = S_0 - (S_2 - k_2)$$

$$b_2 = S_0 - (S_3 - k_3)$$

$$b_3 = S_0 - (S_4 - k_4)$$

$$b_4 = S_0 - (S_5 - k_5)$$

$$b_5 = S_0 - (S_6 - k_6)$$

$$b_6 = S_0 - (S_7 - k_7)$$

finally the last byte is given by:

$$b_7 = S_0 - (b_0 + b_1 + b_2 + b_3 + b_4 + b_5 + b_6)$$

Therefore the decryption function of the block b of the message is defined by the following steps:
*For i = 0 To n - 2 do:*

$$fmix^{-1} \; S_i, \; S_{i+1}, \; q_i$$

*Next*
*For i = n - 1 To 1 Step -1*

$$fmix^{-1} \; S_i, \; S_{i-1}, \; p_i$$

*Next* sum = 0
*For i = 1 To N - 1 do:*

$$b_i = S_0 - (s_i - k_i)$$

$$sum = sum + b_i$$

$$b_i = b_i \oplus k_i$$

*Next*

$$b_0 = (S_0 - sum) \oplus k_0$$

The mixing function *fmix* and its inverse function *fmix*[-1] used above in the pseudocodes are defined by the following relations

$$fmix: \qquad y = (y + x + k) \ Mod \ 2^8$$

$$x = (x + y + k) \ Mod \ 2^8$$

$$fmix^{-1}: \qquad x = (x - y - k) \ And \ 2^8-1$$

$$y = (y - x - k) \ And \ 2^8-1$$

According to a further characteristic, it is possible to provide a scheduling of the Master key (or session key) which is the one really exchanged between the communicating entities and from which the key values are determined both for the sum step modulo 2 and for the step of substitution of each individual byte in the block to be summed. Advantageously this step consists in creating three tables used for the encryption and decryption step. The 32-bit tables P and Q are used in the mixing step while the 8-bit table (vector) k is used in the sum step modulo 2 and in the step of substitution of the individual bytes as defined above even with the example of the substitution of the 8-bit message block.

The key can change from a minimum of 64-bits to 1024-bits. By the extension of the block the security increases in an almost exponential manner since the difficulties of the cryptography analysis of the blocks increase.

The scheduling step is better described and with a more accuracy by the following scheduling pseudocode of the Master key:

i.e.
a = 0
b = 0
nk = 8
ks = session key
L = Lenght of the block to be encrypted: 8, 16, 32, ...256-byte (multiples of 8)
For r = 1 To 2 do:
w = 0
For i = 1 To (L \ nk) do:
z = nk-1
For j = 0 To nk - 1 do:

$$a = a + (ks(z) >>> 7 \oplus ks(z) >>> 18 \oplus ks(z) >> 3) \oplus b$$

$$b = b + (ks(w) >>> 7 \oplus ks(w) >>> 18 \oplus ks(w) >> 3) \oplus a$$

ks (w) = a
ks (z) = ks (z) $\oplus$ b
z = z - 1
w = w + 1

*Next*
*Next*

*// create 32-bit P and Q vector*

*If r = 1 Then*
*For i = 0 To L - 1 do:*

$$p(i) = ks(i)$$

*Next*
*Else*
*For i = 0 To L - 1 do:*

$$q(i) = ks(i)$$

*Next*
*End If*
*Next*

*// create substitution vector*

*For i = 0 to L - 1 do:*

$$k(i) = Abs( ( p(i) \oplus q(i) ) \bmod 256)$$

*Next*
*Next*
Wherein the following applies for the operators in use:

*>>> := Right Shift,*
*>> := Left Shift,*
*$\oplus$ := sum modulo 2*
*Abs = calculates the absolute value*
*\ = integer division*

## Claims

1. Encryption and decryption method, comprising

    i) a first public-key or asymmetric encryption/decryption step, comprising:

        step 1: creating the private key
        in which a private key is generated for each of at least two mutually communicating entities, which private key is known only by the corresponding entity;
        step 2: creating the public key

            wherein for each of at least two mutually communicating entities a public key is generated as a function of the private key owned by the said entity,
            the said public key being a numerical value calculated by means of a Hash sum modulus function of the private key of the said entity;
            the private key being composed of the matrix $A_{mxn}$ with $1 \leq Ai, j \leq n$ and mxn $\forall m, n, = 1, ..., n, \in Z$ and further comprising the step of
            applying a function modifying the value of the public keys according to the relation
            v+rnd*p
            in which
            v is the public key, rnd is a pseudo-random value and p is a random integer shared by the communicating entities,
            exchanging between two communicating entities their public keys summed to the said random value rnd*p;

    ii) a second symmetric key encryption/decryption step, for which a secret or session key is provided for encryption/decryption of one or more second messages transmitted between said at least two communicating entities, comprising:

said secret or session key being exchanged between the at least two communicating entities using the first public-key encryption step and said encryption/decryption secret key forming the first message, wherein the function f (x) for creating the public key is selected from the following groups:

First group

$$f(x) = \{[(A(r,0) <<< w_1) + (A(r,0) >> w_2)] * (i + w_3)\} \bmod q$$

$$f(x) = \{[(A(r,0) >>> w_1) + (A(r,0) << w_2)] * (i + w_3)\} \bmod q$$

$$f(x) = \{[(A(r,0) <<< w_1) + (A(r,0) << w_2)] * (i + w_3)\} \bmod q$$

$$f(x) = \{[(A(r,0) >>> w_1) + (A(r,0) >> w_2)] * (i + w_3)\} \bmod q$$

Second group

$$f(x) = \{[(A(r,0) << w_1) + (A(r,0) >>> w_2)] * (i + w_3)\} \bmod q$$

$$f(x) = \{[(A(r,0) >> w_1) + (A(r,0) <<< w_2)] * (i + w_3)\} \bmod q$$

$$f(x) = \{[(A(r,0) << w_1) + (A(r,0) <<< w_2)] * (i + w_3)\} \bmod q$$

$$f(x) = \{[(A(r,0) >> w_1) + (A(r,0) >>> w_2)] * (i + w_3)\} \bmod q$$

where
$w_1$ and $w_2$ designate integer values in the range from 1 to 31 for 32-bit processors and 1-63 for 64-bit processors ;
$w_3$ is an integer value in the range from 1 to 32bit for 32-bit processors and 1-64 for 64-bit processors ; the
symbols <<, >>, <<<, >>> represent bit-shift left operations by $w_2$ positions, bit-shift right operations by $w_2$ positions, bit-rotate left operations by $w_1$ positions and bit-rotate right operations by $w_1$ positions respectively.

2. Ecryption and decryption method as claimed in claim 1, wherein the private key is composed of a matrix $A_{mxn}$ of m rows and n columns of private values and a private modulus value q and wherein the public key is calculated according to the following function:

$$S = \left[ \sum_{i=1}^{R} f(x) \right] + rnd * p$$

Public key
where:
$f(x)$ is a non-perfect hash function and in particular a function modulo q whose inputs are the values of the matrix $A_{mxn}$ with $1 \leq Ai, j \leq n$,
q is a private modulus value;
p is a public modulus value and is a random integer with $p \in Z^+$ shared by the communicating entities;
R is a public value expressing the dimension of the matrix $A_{mxn}$;
$i$ is an iterator index with $i \in Z^+$
S is the result of the summation and corresponding to the public key,
rnd is the said random number;
wherein the values of p and R are two public values agreed by the communicating parties or which are predetermined during setup of the encryption/decryption system.

3. Method as claimed in claim 1 or 2 wherein: The creation of the matrix A is carried out according to the following steps::

$$A_{r,0} = rnd \qquad \text{with } A_{r,0} \in Z \text{ and } 1 \leq r \leq R$$
$$A_{r,1} = rnd * p \qquad \text{with } A_{r,1} \in Z \text{ and } 1 \leq r \leq R$$
$$q = rnd * p \qquad \text{with } q \in Z^+$$
$$\text{Constraints:}$$
$$q \neq p; \; A_{r,0} \; (mod \; p) \neq 0 \text{ e } A_{r,0} > q$$

Where:

r is the general row of the matrix;
p with $p \in Z^+$ is the public modulus value that is shared and known by all communicating parties;
$A_{r,0}$ and q are private random values and q is used as a modulus in the Hash sum modulus function $f(x)$

4. Method as claimed in one or more of the preceding claims, wherein the function for creating the secret key is selected from the following groups:

First group

$$f(x) = \{[(A(r,0) <<< w_1) + (A(r,0) >> w_2)] * (i + w_3) + A(r,1)\} \bmod q$$

$$f(x) = \{[(A(r,0) >>> w_1) + (A(r,0) << w_2)] * (i + w_3) + A(r,1)\} \bmod q$$

$$f(x) = \{[(A(r,0) <<< w_1) + (A(r,0) << yw_2] * (i + w_3) + A(r,1)\} \bmod q$$

$$f(x) = \{[(A(r,0) >>> w_1) + (A(r,0) >> w_2)] * (i + w_3) + A(r,1)\} \bmod q$$

Second group

$$f(x) = \{[(A(r,0) << w_1) + (A(r,0) >>> w_2)] * (i + w_3) + A(r,1)\} \bmod q$$

$$f(x) = \{[(A(r,0) >> w_1) + (A(r,0) <<< w_2)] * (i + w_3) + A(r,1)\} \bmod q$$

$$f(x) = \{[(A(r,0) << w_1) + (A(r,0) <<< w_2)] * (i + w_3) + A(r,1)\} \bmod q$$

$$f(x) = \{[(A(r,0) >> w_1) + (A(r,0) >>> w_2)] * (i + w_3) + A(r,1)\} \bmod q$$

where : $w_1$ and $w_2$ are integer values in the range from 1 to 31 for 32-bit processors and 1-63 for 64-bit processors ;
$w_3$ is an integer value in the range from 1 to 32bit for 32-bit processors and 1-63 for 64-bit processors;
the symbols <<, >>, <<<, >>> represent bit-shift left operations by $w_2$ positions, bit-shift right operations by $w_2$ positions, bit-rotate left operations by $w_1$ positions and bit-rotate right operations by $w_1$ positions respectively.

5. Method as claimed in one or more of the preceding claims, wherein the bit size of the key is determined by the relation

$$l \; = \; m \; * \; n \; * \; w$$

where m is the number of rows of the matrix A, *n* is the number of columns of the matrix A and w is the bit size of the key.

6. Method as claimed in one or more of the preceding claims , **characterized in that** the encryption function performs an algebraic sum of the whole generated encrypted message such to represent the whole n-bit encrypted message in 8 bits only for messages up to 1024 bits and it is described by the following relation:

$$S_i = fmix[\sum_{i=0}^{n-1} (sub(bi \oplus ki) , ki), pi, qi]$$

Where:

*fmix* is a mixing function for each ith summmation modulo 8-bit that uses two keys $p_i$, $q_i$;
sub is the substitution function which follows the following steps of substituting the individual byte bi and the algebraic sum of the individual bytes, that is the function that substitutes $k_i$ for $b_i$:

*For i = 1 To N - 1 do:*

$S_i = S_0 - b_i + k_i$
*Next* ;

$k_i$ is the ith byte of the key in the Xor function;
$b_i$ is the ith byte of a general message.
and, wherein encryption occurs using the following steps expressed as pseudocode:

a. Binary sum namely mod 2 with key $k_i$:

*For i = 0 To N - 1 do:*

$b_i = b_i \oplus k_i$

*Next*

b. Original algebraic sum:

*For i = 0 To N - 1 do:*
*So = So + bi*
*Next*

c. Individual byte substitution and algebraic sum of individual bytes namely substitution of $k_i$ for $b_i$:

*For i = 1 To N - 1 do:*
*Si = S_0 - b_i + k_i*
*Next*

d. application of the mixing function *fmix*

*For i = 1 To N-1 do*
*fmix S_i, S_{i-1}, pi*
*Next*
*For i = N - 2 To 0 Step -1*
*fmix S_i, S_{i+1}, qi*
*Next*
Where:

*fmix* is an sum function modulo 8-bit using two keys $p_i$, $q_i$;
$b_i$ is the ith byte of a general message.

$S_i$ is the ith algebraic sum.
and, wherein
decryption occurs using a function that carries out the following steps:

*For i = 0 To N - 2 do:*
*fmix$^{-1}$ $S_i$, $S_{i+1}$, $q_i$*
*Next*
*For i = N - 1 To 1 Step -1*
*fmix$^{-1}$ $S_i$, $S_{i-1}$, $p_i$*
*Next*
*sum = 0*
*For i = 1 To N - 1 do:*

$bi = s_0 - (s_i - k_i)$
*sum = sum + bi*
$b_i = b_i \oplus k_i$

*Next*
$b_0 = (b_0 - sum) \oplus k_0$
with
fmix$^{-1}$: x = (x - y - k) And $2^8$-1;
y = (y - x - k) And $2^8$-1
where
*fmix* is a sum function modulo 8-bit using two keys $p_i$, $q_i$ and fmix$^{-1}$ is its inverse function;
sum is an integer variable containing the algebraic sum of the individual bytes of the block;
$k_i$ is the ith byte of the secret key;
$b_i$ is the ith byte of a general message.
*Si* is the ith algebraic sum;
K contains the ith value of $p_i$ or $q_i$;
x contains the ith value of $S_i$;
y contains the ith value of $S_{i+1}$ or $S_{i-1}$;
p is an integer vector containing the secret key obtained in the session key scheduling step;
q is an integer vector containing the secret key obtained in the session key scheduling step.

7. Method as claimed to claim 6 , wherein the
encryption/decryption key is generated from a master key which is used to create three tables for the values of P,
Q and K, the 32-bit P and Q values being used in the function *fmix* and the 8-bit K values being used in the individual
byte substitution step, and which Master key is calculated by the following method, expressed as pseudocode

i.e.
*a = 0*
*b = 0*
*nk = 8*
*$k_s$ = session key*
*L = Length of the block to be encrypted; 8,16, 32, ...256-byte, that is multiples of 8 byte For r = 1 To 2 do:*
*w = 0*
*For i = 1 To (L \ nk) do:*
*z = nk-1*
*For j = 0 To nk - 1 do:*

*a= a + (ks (z) >>>7$\oplus$ ks (z) >>>18$\oplus$ ks (z) >>3) $\oplus$ b*
*b= b + (ks (w) >>>7$\oplus$ ks (w) >>>18$\oplus$ ks (w) >>3) $\oplus$ a*
*ks(w) = a*
*ks (z) = ks (z) $\oplus$ b*
*z = z - 1*
*w = w + 1*

*Next*

*Next*
*// create 32-bit P and Q vector*
*If r = 1 Then*
*For i = 0 To L - 1 do:*
*p(i) = ks(i)*
*Next*
*Else*
*For i = 0 To L - 1 do: q(i) = ks (i)*
*Next*
*End If*
*Next*
*// create substitution vector*
*For i = 0 to L - 1 do: k(i) =Abs( ( p (i) $\oplus$ q(i) ) mod 256)*
*Next*
*wherein the following applies for the operators in use:*

> *>>> = Right Shift*
> *>>> = Left Shift*
> $\oplus$ *= sum modulo 2*
> *Abs = calculates the absolute value*
> *\ = integer division.*

8. Encryption/decryption device, **characterized in that** it comprises a program loaded in a computer's memory and adapted to be executed by said computer, wherein the execution of the program causes the execution of the method as claimed in one or more of the preceding claims 1 to 7.

9. Storage medium readable by a processing unit, **characterised in that** it stores a program that can be executed by said processor, whose execution causes the execution of the method as claimed in one or more of the preceding claims 1 to 7.

10. Encryption/decryption system **characterized in that** it involves the execution of the method as claimed in one or more of the preceding claims 1 to 7 by communicating devices between at least two mutually communicating entities.

**Patentansprüche**

1. Verschlüsselungs- und Entschlüsselungsverfahren, umfassend

i) einen ersten öffentlichen Schlüssel oder asymmetrischen Verschlüsselungs-/Entschlüsselungsschritt, umfassend:

Schritt 1: Erzeugen des privaten Schlüssels
in dem ein privater Schlüssel für jede von wenigstens zwei miteinander kommunizierenden Entitäten erzeugt wird, wobei der private Schlüssel nur von der entsprechenden Entität bekannt ist;
Schritt 2: Erzeugen des öffentlichen Schlüssels
wobei für jede von wenigstens zwei miteinander kommunizierenden Entitäten ein öffentlicher Schlüssel als Funktion des privaten und der besagten Entität gehörenden Schlüssels erzeugt wird,
wobei der öffentliche Schlüssel ein numerischer Wert ist, der mit Hilfe einer Hash-Summenmodulus-Funktion des privaten Schlüssels der genannten Entität berechnet wird;
wobei der private Schlüssel sich aus der Matrix $A_{mxn}$
mit $1 \leq Ai, j \leq n$ und $\forall i = 1,...,n, p \in Z$ zusammengesetzt ist und ferner den folgenden Schritt umfasst
Anwenden einer Funktion zur Modifizierung des Wertes der öffentlichen Schlüssel gemäß der Beziehung
v+rnd*p
in dem
v der öffentliche Schlüssel, rnd ein Pseudo-Zufallswert und p eine zufällige ganze Zahl ist, die von den kommunizierenden Entitäten geteilt wird,
Austauschen zwischen zwei kommunizierenden Entitäten ihrer öffentlichen Schlüssel, die zu dem genannten Zufallswert rnd*p summiert werden;

ii) einen zweiten Verschlüsselungs-/Entschlüsselungsschritt mit symmetrischem Schlüssel, für den ein Geheim- oder Sessionschlüssel zur Verschlüsselung/Entschlüsselung einer oder mehrerer zweiter Nachrichten bereitgestellt wird, die zwischen den wenigstens zwei kommunizierenden Entitäten übertragen werden, umfassend:

der besagte Geheim- oder Sessionschlüssel zwischen den wenigstens zwei kommunizierenden Entitäten unter Verwendung des ersten Verschlüsselungsschritts mit öffentlichem Schlüssel ausgetauscht wird und der Geheimschlüssel für die Verschlüsselung/Entschlüsselung die erste Nachricht bildet, wobei die Funktion f(x) zum Erzeugen des öffentlichen Schlüssel aus den folgenden Gruppen ausgewählt wird:

Erste Gruppe

$$f(x) = \{[(A(r,0) <<< w_1) + (A(r,0) >> w_2)] * (i + w_3)\} \bmod q$$

$$f(x) = \{[(A(r,0) >>> w_1) + (A(r,0) << w_2)] * (i + w_3)\} \bmod q$$

$$f(x) = \{[(A(r,0) <<< w_1) + (A(r,0) << w_2)] * (i + w_3)\} \bmod q$$

$$f(x) = \{[(A(r,0) >>> w_1) + (A(r,0) >> w_2)] * (i + w_3)\} \bmod q$$

Zweite Gruppe

$$f(x) = \{[(A(r,0) << w_1) + (A(r,0) >>> w_2)] * (i + w_3)\} \bmod q$$

$$f(x) = \{[(A(r,0) >> w_1) + (A(r,0) <<< w_2)] * (i + w_3)\} \bmod q$$

$$f(x) = \{[(A(r,0) << w_1) + (A(r,0) <<< w_2)] * (i + w_3)\} \bmod q$$

$$f(x) = \{[(A(r,0) >> w_1) + (A(r,0) >>> w_2)] * (i + w_3)\} \bmod q$$

wobei
$w_1$ und $w_2$ bezeichnen ganzzahlige Werte im Bereich von 1 bis 31 für 32-Bit-Prozessoren und 1-63 für 64-Bit-Prozessoren;
$w_3$ ist ein ganzzahliger Wert im Bereich von 1 bis 32-Bit für 32-Bit-Prozessoren und 1-64 für 64-Bit-Prozessoren;
die Symbole <<,>>,<<<,>>> stehen für
Operationen mit Bit-Verschiebung nach links um $w_2$ Positionen, Operationen mit Bit-Verschiebung nach rechts um $w_2$ Positionen, Operationen mit Bit-Drehung nach links um $w_1$ Positionen bzw. Operationen mit Bit-Drehung nach rechts um $w_1$ Positionen.

2. Verschlüsselungs- und Entschlüsselungsverfahren nach Anspruch 1, wobei der private Schlüssel aus einer Matrix $A_{mxn}$ mit m Zeilen und n Spalten privater Werte und einem privaten Moduluswert q besteht und wobei der öffentliche Schlüssel gemäß der folgenden Funktion berechnet wird:

öffentliche Schlüssel

$$S = \left[ \sum_{i=1}^{R} f(x) \right] + rnd * p$$

wobei:

$f(x)$ ist eine nicht-perfekte Hash-Funktion und insbesondere eine Funktion modulo q, deren Eingaben die Werte der Matrix $A_{mxn}$ sind mit $1 \leq Ai, j \leq n$

q ist ein privater Moduluswert;

p ist ein öffentlicher Moduluswert und eine zufällige ganze Zahl mit $p \in Z+$ die von den kommunizierenden Entitäten geteilt wird;

R ist ein öffentlicher Wert, der die Dimension der Matrix $A_{mxn}$ ausdrückt;

i ist ein Iterator-Index mit $i \in Z+$

S ist das Ergebnis der Summierung und entspricht dem öffentlichen Schlüssel,

rnd ist die besagte Zufallszahl;

wobei die Werte von p und R zwei öffentliche Werte sind, die von den kommunizierenden Partnern vereinbart wurden oder die während der Einrichtung des Verschlüsselungs-/Entschlüsselungssystems vorbestimmt sind.

3. Verfahren nach Anspruch 1 oder 2, wobei:

die Erzeugung der Matrix A gemäß den folgenden Schritten durchgeführt wird:

$A_{r,0} = rnd$ mit $A_{r,0} \in Z$ und $1 \leq r \leq R$

$A_{r,1} = rnd * p$ mit $A_{r,1} \in Z$ und $1 \leq r \leq R$

$q = rnd * p$ mit $q \in Z^+$

Einschränkungen:

$q \neq p; A_{r,0}(mod p) \neq 0$ e $A_{r,0} > q$ wobei:

r ist die allgemeine Zeile der Matrix;

p mit $p \in Z+$ ist der öffentliche Moduluswert, der von allen kommunizierenden Teilnehmern gemeinsam genutzt wird und bekannt ist;

$A_{r,0}$ und q sind private Zufallswerte und q wird als Modulus in der Hash-Summen-Modulus-Funktion $f(x)$ verwendet.

4. Verfahren nach einem oder mehreren der vorhergehenden Ansprüche, wobei die Funktion zur Erzeugung des geheimen Schlüssels aus den folgenden Gruppen ausgewählt wird:

Erste Gruppe

$$f(x) = \{[(A(r,0) <<< w_1) + (A(r,0) >> w_2)] * (i + w_3)\} \bmod q$$

$$f(x) = \{[(A(r,0) >>> w_1) + (A(r,0) << w_2)] * (i + w_3)\} \bmod q$$

$$f(x) = \{[(A(r,0) <<< w_1) + (A(r,0) << w_2)] * (i + w_3)\} \bmod q$$

$$f(x) = \{[(A(r,0) >>> w_1) + (A(r,0) >> w_2)] * (i + w_3)\} \bmod q$$

Zweite Gruppe

$$f(x) = \{[(A(r,0) << w_1) + (A(r,0) >>> w_2)] * (i + w_3)\} \bmod q$$

$$f(x) = \{[(A(r,0) >> w_1) + (A(r,0) <<< w_2)] * (i + w_3)\} \bmod q$$

$$f(x) = \{[(A(r,0) << w_1) + (A(r,0) <<< w_2)] * (i + w_3)\} \bmod q$$

$$f(x) = \{[(A(r,0) >> w_1) + (A(r,0) >>> w_2)] * (i + w_3)\} \bmod q$$

wobei: $w_1$ und $w_2$ sind ganzzahlige Werte im Bereich von 1 bis 31 für 32-Bit-Prozessoren und 1-63 für 64-Bit-Prozessoren;

$w_3$ ist ein ganzzahliger Wert im Bereich von 1 bis 32 Bit für 32-Bit-Prozessoren und 1-63 für 64-Bit-Prozessoren;

die Symbole <<,>>,<<<,>>> stehen für Operationen mit Bit-Verschiebung nach links um $w_2$ Positionen, Operationen mit Bit-Verschiebung nach rechts um $w_2$ Positionen, Operationen mit Bit-Drehung nach links um $w_1$ Positionen bzw. Operationen mit Bit-Drehung nach rechts um $w_1$ Positionen.

5. Verfahren nach einem oder mehreren der vorangehenden Ansprüche, wobei die Bitgröße des Schlüssels durch die folgende Beziehung bestimmt wird

$$L = m * n * w$$

wobei m die Anzahl der Zeilen der Matrix A ist, n die Anzahl der Spalten der Matrix A ist und w die Bitgröße des Schlüssels ist.

6. Verfahren nach einem oder mehreren der vorhergehenden Ansprüche, **dadurch gekennzeichnet, dass** die Verschlüsselungsfunktion eine algebraische Summe der gesamten erzeugten verschlüsselten Nachricht durchführt, so dass die gesamte verschlüsselte n-Bit-Nachricht in nur 8 Bits für Nachrichten bis zu 1024 Bits dargestellt wird, wobei sie durch die folgende Beziehung beschrieben wird:

$$S_i = fmix[\sum_{i=0}^{n-1} (sub(bi \oplus ki), ki), pi, qi]$$

wobei:

$fmix$ ist eine Mischfunktion für jede i-te Summenbildung modulo 8-bit, die zwei Schlüssel $p_i$, $q_i$ verwendet;
sub ist die Substitutionsfunktion, die den folgenden Schritten der Substitution des einzelnen Bytes bi und der algebraischen Summe der einzelnen Bytes folgt, d. h. die Funktion, die $k_i$ durch $b_i$ersetzt:
*For i = 1 To N - 1 do:*

*$S_i = S_0 - b_i + k_i$*
*Next*
*;*
$k_i$ ist das i-te Byte des Schlüssels in der Xor-Funktion;
$b_i$ ist das i-te Byte einer allgemeinen Nachricht
und, wobei die Verschlüsselung unter Verwendung der folgenden, als Pseudocode ausgedrückten Schritte erfolgt:

a. Binärsumme und zwar mod 2 mit Schlüssel $k_i$:

*For i = 0 To N - 1 do:*
*$b_i = b_i \oplus k_i$*
*Next*
*;*

b. Ursprüngliche algebraische Summe:

*For i = 0 To N - 1 do:*

*$S_0 = So + b_i$*
*Next*

c. Substitution einzelner Bytes und algebraische Summe einzelner Bytes, d.h. Substitution von $k_i$ für $b_i$:

> *For i = 1 To N - 1 do:*
> $S_i = S_0 - b_i + k_i$
> *Next*

d. Anwendung der Mischfunktion *fmix*

> *For i = 1 To N-1 do*
> *fmix* $S_i$, $S_{i-1}$, $p_i$
> *Next*
> *For i = N - 2 To 0 Step-1*
> *fmix* $S_i$, $S_{i+1}$, $q_i$
> *Next*
> wobei:

> > *fmix* ist eine Summenfunktion modulo 8-bit mit zwei Schlüsseln $p_i$, $q_i$;
> > $b_i$ ist das i-te Byte einer allgemeinen Nachricht
> > $S_i$ ist die i-te algebraische Summe.
> > und wobei
> > die Entschlüsselung erfolgt mit Hilfe einer Funktion, die folgende Schritte durchführt:

> > > *For i = 0 To N- 2 do:*
> > > $fmix^{-1}$ $S_i$, $S_{i+1}$, $q_i$
> > > *Next*
> > > *For i = N-1 To 1 Step-1*
> > > $fmix^{-1}$ $S_i$, $S_{i-1}$, $p_i$
> > > *Next*
> > > *sum = 0*
> > > *For i = 1 To N-1 do:*

> > > > $b_i = S_0 - (s_i - k_i)$
> > > > *sum = sum + bi*
> > > > $b_i = b_i \oplus k_i$

> > > *Next*
> > > $b_0 = (b_0 - sum) \oplus k_0$
> > > mit
> > > $fmix^{-1}$: x = (x - y - k) And $2^8$-1;
> > > y = (y - x - k) And $2^8$-1
> > > wobei
> > > *fmix* ist eine Summenfunktion modulo 8-bit mit zwei Schlüsseln $p_i$, $q_i$ und $fmix^{-1}$ ist ihre Umkehrfunktion;
> > > sum ist eine ganzzahlige Variable, die die algebraische Summe der einzelnen Bytes des Blocks enthält;
> > > $k_i$ ist das i-te Byte des geheimen Schlüssels;
> > > $b_i$ ist das i-te Byte einer allgemeinen Nachricht $S_i$ ist die i-te algebraische Summe;
> > > K enthält den i-ten Wert von $p_i$ oder $q_i$;
> > > x enthält den i-ten Wert von Si;
> > > y enthält den i-ten Wert von Si+i oder $S_{i-1}$;
> > > p ist ein ganzzahliger Vektor, der den im Schritt der Planung des Sessionschlüssels erhaltenen geheimen Schlüssel enthält;
> > > q ist ein ganzzahliger Vektor, der den geheimen Schlüssel enthält, der im Schritt der Planung des Sessionschlüssels erhalten wurde.

7. Verfahren nach Anspruch 6, wobei der Verschlüsselungs-/Entschlüsselungsschlüssel aus einem Master-Schlüssel erzeugt wird, der verwendet wird, um drei Tabellen für die Werte von P, Q und K zu erstellen, wobei die 32-Bit-Werte von P und Q in der Funktion fmix verwendet werden und die 8-Bit-Werte von K in dem individuellen Byte-Substitutionsschritt verwendet werden, und wobei der Master-Schlüssel durch das folgende Verfahren, ausgedrückt als Pseudocode, berechnet wird

```
d.h.
a = 0
b = 0
nk=8
ks = Sessionschlüssel
L = Länge des zu verschlüsselnden Blocks; 8,16,32,...256-Byte, d.h. Vielfachen von 8 Byte
For r = 1 To 2 do:

    w = 0
    For i = 1 To (L \ nk) do:

        z = nk-1

    For j = 0 To nk - 1 do:

        a= a + (ks(z0>>>7⊕ ks(z)>>>18⊕ ks(z)>>3) ⊕ b
        b= b + (ks(w)>>>7⊕ ks(w)>>>18⊕ ks(w)>>3) ⊕ a
        ks(w) = a
        ks(z) = ks(z) ⊕ b
        z = z-1
        w = w + 1

    Next
    Next
    // 32-Bit-Vektor von P und Q erstellen If r = 1 Then
    For i = 0 To L - 1 do:
    p(i) = ks(i) Next
    Else
    For i = 0 To L - 1 do:
    q(i) = ks(i) Next
    End If
    Next
    // Substitutionsvektor erstellen
    For i = 0 to L -1 do:
    k(i) =Abs( (p(i)⊕ q(i) ) mod 256) Next
    wobei für die verwendeten Operatoren folgendes gilt:

        >>> = Right Shift
        >>> = Left Shift

    ⊕ = Summe Modulo 2
    Abs = Berechnen des Absolutwerts
    \ = Ganzzahlige Division
```

8. Verschlüsselungs-/Entschlüsselungsvorrichtung, **dadurch gekennzeichnet, dass** sie ein in einen Computerspeicher geladenes und zur Ausführung durch den Computer geeignetes Programm umfasst, wobei die Ausführung des Programms die Ausführung des in einem oder mehreren der vorhergehenden Ansprüche 1 bis 7 beanspruchten Verfahrens bewirkt.

9. Speichermedium, das von einer Verarbeitungseinheit lesbar ist, **dadurch gekennzeichnet, dass** es ein Programm speichert, das von dem Prozessor ausgeführt werden kann, dessen Ausführung die Ausführung des Verfahrens nach einem oder mehreren der vorhergehenden Ansprüche 1 bis 7 bewirkt.

10. Verschlüsselungs-/Entschlüsselungssystem, **dadurch gekennzeichnet, dass** es die Ausführung des in einem oder mehreren der vorhergehenden Ansprüche 1 bis 7 beanspruchten Verfahrens durch Kommunikationsvorrichtungen zwischen wenigstens zwei miteinander kommunizierenden Entitäten umfasst.

## Revendications

1. Méthode de chiffrement et de déchiffrement, comprenant

   i) une première étape de chiffrement/déchiffrement à clé publique ou asymétrique, comprenant:

   étape 1: créer la clé privée

   dans laquelle pour chacune d'au moins deux entités communiquant entre elles est générée une clé privée, laquelle clé privée n'est connue que de l'entité correspondante;
   étape 2: créer la clé publique
   où, pour chacune d'au moins deux entités communiquant mutuellement, une clé publique est générée en fonction de la clé privée détenue par ladite entité,
   ladite clé publique étant une valeur numérique calculée au moyen d'une fonction de somme de hachage en module de la clé privée de ladite entité;
   la clé privée étant composée de la matrice $A_{mxn}$ $1 \leq Ai,j \leq n$ avec et mxn $\forall m,n = 1,...,n \in Z$
   et comprenant en outre l'étape consistant à appliquer une fonction modifiant la valeur des clés publiques en fonction de la relation
   v+rnd*p
   dans laquelle
   v est la clé publique, rnd est une valeur pseudo-aléatoire et p est un entier aléatoire partagé par les entités communicantes,
   échanger entre deux entités communicantes leurs clés publiques additionnées à ladite valeur aléatoire rnd*p;

   ii) une seconde étape de chiffrement/déchiffrement à clé symétrique, pour laquelle est fournie une clé secrète ou de session pour le chiffrement/déchiffrement d'un ou plusieurs seconds messages transmis entre lesdites au moins deux entités communicantes, comprenant:

   ladite clé secrète ou de session étant échangée entre les au moins deux entités communicantes en utilisant la première étape de chiffrement à clé publique et ladite clé secrète de chiffrement/déchiffrement formant le premier message,
   où la fonction f(x) pour créer la clé publique est choisie parmi les groupes suivants:

   Premier groupe

$$f(x) = \{[(A(r,0) <<< w_1) + (A(r,0) >> w_2)] * (i + w_3)\} \bmod q$$

$$f(x) = \{[(A(r,0) >>> w_1) + (A(r,0) << w_2)] * (i + w_3)\} \bmod q$$

$$f(x) = \{[(A(r,0) <<< w_1) + (A(r,0) << w_2)] * (i + w_3)\} \bmod q$$

$$f(x) = \{[(A(r,0) >>> w_1) + (A(r,0) >> w_2)] * (i + w_3)\} \bmod q$$

   Deuxième groupe

$$f(x) = \{[(A(r,0) << w_1) + (A(r,0) >>> w_2)] * (i + w_3)\} \bmod q$$

$$f(x) = \{[(A(r,0) >> w_1) + (A(r,0) <<< w_2)] * (i + w_3)\} \bmod q$$

$$f(x) = \{[(A(r,0) << w_1) + (A(r,0) <<< w_2)] * (i + w_3)\} \bmod q$$

$$f(x) = \{[(A(r,0) >> w_1) + (A(r,0) >>> w_2)] * (i + w_3)\} \bmod q$$

où

$w_1$ et $w_2$ désignent des valeurs entières dans la plage 1 à 31 pour les processeurs 32 bits et 1-63 pour les processeurs 64 bits;

$w_3$ est une valeur entière dans la plage de 1 à 32 bits pour les processeurs 32 bits et 1-64 pour les processeurs 64 bits;

les symboles <<,>>,<<<,>>> représentent des opérations de décalage de bits à gauche de $w_2$ positions, des opérations de décalage de bits à droite de $w_2$ positions, des opérations de rotation de bits à gauche de $w_1$ positions et des opérations de rotation de bits à droite de $w_1$ positions, respectivement.

2. Méthode de chiffrement et de déchiffrement selon la revendication 1, où la clé privée est composée d'une matrice $A_{mxn}$ de m lignes et n colonnes de valeurs privées et d'une valeur module privée q et où la clé publique est calculée selon la fonction suivante:

$$\text{Clé publique} \qquad S = \left[ \sum_{i=1}^{R} f(x) \right] + rnd * p$$

où:

$f(x)$ est une fonction de hachage non parfaite et en particulier une fonction module q dont les entrées sont les valeurs de la matrice $A_{mxn}$ $1 \leq Ai,j \leq n$ avec ,

q est une valeur module privée;

p est une valeur de module publique et est un nombre entier aléatoire avec $p \in Z^+$ partagé par les entités communicantes;

R est une valeur publique exprimant la dimension de la matrice $A_{mxn}$;

$i$ est un index itérateur avec $i \in Z_+$

S est le résultat de la sommation et correspond à la clé publique,

rnd est ledit numéro aléatoire;

où les valeurs de p et R sont deux valeurs publiques convenues par les parties communicantes ou qui sont prédéterminées pendant la configuration du système de chiffrement/déchiffrement.

3. Méthode selon la revendication 1 ou 2, où:

La création de la matrice A s'effectue selon les étapes suivantes: :

$A_{r,0} = rnd$ avec $A_{r,0} \in Z$ et $1 \leq r \leq R$

$A_{r,1} = rnd * p$ avec $A_{r,1} \in Z$ et $1 \leq r \leq R$

$q = rnd * p$ avec $q \in Z_+$ Contraintes:

$q \neq p; A_{r,0} (mod\ p) \neq 0$ et $A_{r,0} > q$ Où:

$r$ est la ligne générale de la matrice;

p avec $p \in Z^+$ est la valeur du module public qui est partagée et connue par toutes les parties communicantes;

$A_{r,0}$ et q sont des valeurs aléatoires privées et q est utilisé comme module dans la fonction de somme de hachage en module $f(x)$.

4. Méthode selon l'une ou plusieurs des revendications précédentes, où la fonction pour créer la clé publique est choisie parmi les groupes suivants:

Premier groupe

$$f(x) = \{[(A(r,0) <<< w_1) + (A(r,0) >> w_2)]*(i + w_3) + A(r,1)\}\bmod q$$

$$f(x) = \{[(A(r,0) >>> w_1) + (A(r,0) << w_2)]*(i + w_3) + A(r,1)\}\bmod q$$

$$f(x) = \{[(A(r,0) <<< w_1) + (A(r,0) << yw_2]*(i + w_3) + A(r,1)\}\bmod q$$

$$f(x) = \{[(A(r,0) >>> w_1) + (A(r,0) >> w_2)]*(i + w_3) + A(r,1)\}\bmod q$$

<u>Deuxième groupe</u>

$$f(x) = \{[(A(r,0) << w_1) + (A(r,0) >>> w_2)]*(i + w_3) + A(r,1)\}\bmod q$$

$$f(x) = \{[(A(r,0) >> w_1) + (A(r,0) <<< w_2)]*(i + w_3) + A(r,1)\}\bmod q$$

$$f(x) = \{[(A(r,0) << w_1) + (A(r,0) <<< w_2)]*(i + w_3) + A(r,1)\}\bmod q$$

$$f(x) = \{[(A(r,0) >> w_1) + (A(r,0) >>> w_2)]*(i + w_3) + A(r,1)\}\bmod q$$

Où : $w_1$ et $w_2$ désignent des valeurs entières dans la plage 1 à 31 pour les processeurs 32 bits et 1-63 pour les processeurs 64 bits;
$w_3$ est une valeur entière dans la plage de 1 à 32 bits pour les processeurs 32 bits et 1-64 pour les processeurs 64 bits;
les symboles $<<,>>,<<<,>>>$ représentent des opérations de décalage de bits à gauche de $w_2$ positions, des opérations de décalage de bits à droite de $w_2$ positions, des opérations de rotation de bits à gauche de $w_1$ positions et des opérations de rotation de bits à droite de $w_1$ positions, respectivement.

5. Méthode selon l'une ou plusieurs des revendications précédentes, où la taille des bits de la clé est déterminée par la relation

$l = m * n * w$
où m est le nombre de lignes de la matrice A, $n$ est le nombre de colonnes de la matrice A et $w$ est la taille en bits de la clé.

6. Méthode selon l'une ou plusieurs des revendications précédentes, **caractérisée en ce que** la fonction de chiffrage effectue une somme algébrique de l'entier message chiffré généré de façon à représenter l'entier message chiffré de n bits en 8 bits seulement pour les messages jusqu'à 1024 bits et elle est décrite par la relation suivante:

$$S_i = fmix[\sum_{i=0}^{n-1} (sub(bi \oplus ki), ki), pi, qi]$$

Où:

$fmix$ est une fonction de mélange pour chaque i-ème sommation modulo 8 bits qui utilise deux clés $p_i$, $q_i$;
sub est la fonction de substitution qui suit les étapes suivantes de substitution du byte individuel bi et de la somme algébrique des bytes individuels, c'est-à-dire la fonction qui substitue $k_i$ à $b_i$:
*For i = 1 To N - 1 do:*

$S_i = S_0 - b_i + k_i$

*Next*

$k_i$ est le i-ème byte de la clé dans la fonction Xor;
$b_i$ est le i-ème byte d'un message général.
et, où le chiffrage se produit en utilisant les étapes suivantes exprimées en pseudo-code:

a. Somme binaire à savoir mod 2 avec clé $k_i$:

*For i = 0 To N - 1 do:*
$b_i = b_i \oplus k_i$
*Next*

b. Somme algébrique originale:

*For i = 0 To N - 1 do:*
$S_0 = S_0 + b_i$
*Next*

c. Substitution du byte individuel et somme algébrique des bytes individuels, à savoir substitution de $k_i$ par $b_i$:

*For i = 1 To N - 1 do:*
$S_i = S_0 - b_i + k_i$
*Next*

d. application de la fonction de mélange *fmix*

*For i = 1 To N-1 do*
*fmix* $S_i,\ S_{i-1},\ p_i$
*Next*
*For i = N - 2 To 0 Step -1*
*fmix* $S_i,\ S_{i+1},\ q_i$
*Next*
Où:

*fmix* est une fonction somme module 8 bits qui utilise deux clés $p_i$, $q_i$;
$b_i$ est le i-ème byte d'un message général.
$S_i$ est la i-ème somme algébrique.
et, où
le déchiffrement se produit à l'aide d'une fonction qui effectue les étapes suivantes:

*For i = 0 To N - 2 do:*
*fmix$^{-1}$* $S_i,\ S_{i+1},\ q_i$
*Next*
*For i = N - 1 To 1 Step -1*
*fmix$^{-1}$* $S_i,\ S_{i-1},\ p_i$
*Next*
*sum = 0*
*For i = 1 To N - 1 do:*

$b_i = s_0 - (S_i - k_i)$
*sum = sum + $b_i$*
$b_i = b_i \oplus k_i$

*Next*
$b_0 = (b_0 - sum) \oplus k_0$
avec
fmix$^{-1}$: x = (x - y - k) And $2^8$-1;
y = (y - x - k) And $2^8$-1

où

*fmix* est une fonction somme module 8 bits qui utilise deux clés $p_i$, $q_i$ e fmix$^{-1}$ est sa fonction inverse;

sum est une variable entière contenant la somme algébrique des bytes individuels du bloc;

$k_i$ est le i-ème byte de la clé secrète;

$b_i$ est le i-ème byte d'un message général.

$S_i$ est la i-ème somme algébrique;

K contient la i-ème valeur de $p_i$ ou qi;

x contient la i-ème valeur de $S_i$;

y contient la i-ème valeur de $S_{i+1}$ ou $S_{i-1}$;

p est un vecteur d'entiers contenant la clé secrète obtenue lors de l'étape de programmation de la clé de session;

q est un vecteur d'entiers contenant la clé secrète obtenue lors de l'étape de programmation de la clé de session.

**7.** Méthode selon la revendication 6, où la clé de chiffrement/déchiffrement est générée à partir d'une clé principale qui est utilisée pour créer trois tables pour les valeurs de P, Q et K, les valeurs P et Q de 32 bits étant utilisées dans la fonction *fmix* et les valeurs K de 8 bits étant utilisées dans l'étape de substitution du byte individuel, et laquelle clé principale est calculée par la méthode suivant, exprimée en pseudo-code

```
c'est-à-dire
a = 0
b = 0
nk = 8
ks = clé de session
L = Longueur du bloc à chiffrer; 8, 16, 32,... 256-bytes, c'est-à-dire des multiples de 8 bytes
For r = 1 To 2 do:

        w = 0
        For i= 1 To (L \ nk) do:

                z = nk-1
                For j = 0 To nk - 1 do:

                        a= a + (ks(z)>>>7⊕ ks(z)>>>18⊕ ks(z)>>>3) ⊕ b
                        b= b + (ks(w)>>>7⊕ ks(w)>>>>18⊕ ks(w)>>>3) ⊕ a ks(w) = a
                        ks(z) = ks (z) ⊕ b
                        z = z - 1
                        w = w + 1

        Next
        Next
        // crées vecteur P et Q de 32 bits If r = 1 Then
        For i = 0 To L - 1 do:
        p (i) = ks (i)
        Next
        Else
        For i = 0 To L - 1 do:
        q(i) = ks(i)
        Next
        End If
        Next
        // crées vecteur de substitution For i = 0 to L - 1 do:
        k (i) =Abs ( ( p(i) ⊕ q(i) ) mod 256)
        Next
        où ce qui suit s'applique aux opérateurs utilisés:

            >>> = Right Shift
            >>> = Left Shift
```

$\oplus$ = *somme module 2*
*Abs = calcule la valeur absolue*
\- = *division entière*

8.  Dispositif de chiffrement/déchiffrement, **caractérisé en ce qu'**il comprend un programme chargé dans la mémoire d'un ordinateur et adapté pour être exécuté par ledit ordinateur, dans lequel l'exécution du programme provoque l'exécution de la méthode selon l'une ou plusieurs des revendications précédentes 1 à 7.

9.  Support de stockage lisible par une unité de traitement, **caractérisé en ce qu'**il stocke un programme exécutable par ledit processeur, dont l'exécution provoque l'exécution de la méthode selon l'une ou plusieurs des revendications précédentes 1 à 7.

10. Système de chiffrement/déchiffrement **caractérisé en ce qu'**il implique l'exécution de la méthode selon l'une ou plusieurs des revendications précédentes 1 à 7 par des dispositifs de communication entre au moins deux entités mutuellement communicantes.

| A | Exact Public Key | 50864243507322509549260 |
|---|---|---|
| | Fictious Public Key | -1989381 31333477204257249 |

| B | Exact Public Key | 7233473501498938131342549 |
|---|---|---|
| | Fictious Public Key | 3023507005508642439549 29 |

# Fig. 1

| Public Parameters | |
|---|---|
| **p. R** | |

| Private Parameters and Calculation of Public Key | |
|---|---|
| **q. A** | |
| A | B |
| $$S_a = \sum_{i=1}^{R} f(p, q_a, A_a, R)$$ | $$S_b = \sum_{i=1}^{R} f(p, q_b, A_b, R)$$ |

| Exchange of Public Key | |
|---|---|
| A sends its key to B $\longrightarrow$ $S_\alpha$ | |
| $S_b$ $\longleftarrow$ B sends its key to A | |

| Calculation of Session Key | |
|---|---|
| A | B |
| $Ks_a = f(A_a, S_b)$ | $Ks_b = f(A_b, S_a)$ |
| $Ks_a = Ks_b = ks$ | |

# Fig. 2

| Key A : -7281919011861039825731 | .Coding key sequence in common to A and B |
|---|---|
| | 50321649104059<br>12955178152894<br>-9502446028872<br>78752040146388<br>130269114152425<br>149088894675020<br>-41668530121839<br>-2379887443125<br>86695056139840<br>-12492401678935<br>3289829612707<br>16345614663945<br>...∞ |
| Key B : 928197909964l039889075 | Coding key sequence in common to A and B |
| | 50321649104059<br>12955178152894<br>-9502446028872<br>78752040146388<br>130269114152425<br>149088894675020<br>-41668530121839<br>-2379887443125<br>86695056139840<br>-12492401678935<br>3289829612707<br>16345614663945<br>...∞ |

Fig. 3

Trend of average power consumption

RSA/DH

Method according to the invention

Fig. 5

Fig. 6

10

11

Plain
message

**m**

⇨ Encryption
algorithm

Coded message

**m'**

12

Original
message **m**

⇦ Decryption
algorithm

13

14

Fig. 7

| System type | RSA/DH | ECC | Method according to invention |
|---|---|---|---|
| Key length | 1024 bit | 192 bit | 1024 bit |
| Time for creating the key | 1280 ms | 231 ms | 14 ms |
| Tests made on old design computer in c++ Microsoft language using a Pentium III at 300MHz | | | |

Fig. 8

**Table of equivalences of the key lenghts for the different public-key cryptographic systems expressed in bit.**

| ECC | RSA/DH | Private Key/SX-1 |
|---|---|---|
| 192 | 1024 | 80 |
| 224 | 2048 | 112 |
| 256 | 3072 | 128 |
| 384 | 7608 | 192 |
| 521 | 15360 | 256 |

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4405829 A
- US 5146500 A
- EP 924895 A
- US 6081597 A

- US 2006280300 A1
- US 20060280300 A
- US 20062803000 A1

**Non-patent literature cited in the description**

- implementation of One-Time Pad Cryptography. *Information Technology Journal,* 01 January 2005, vol. 4 (1), 87-95

- **SEONGHAN SHIN et al.** Elliptic Curve based Authenticated Key Agreement Protocol for Wireless Security. *COMPUTATIONAL INTELLIGENCE AND SECURITY, 2006 INTERNATIONAL CONFERENCE ON, IEEE, PI,* 01 November 2006, ISBN 978-1-4244-0604-3, 1096-1100